# EUROPEAN PATENT APPLICATION

(11) **EP 4 625 101 A1**
(43) Date of publication of application: **01.10.2025**
(21) Application number: 24837526.3
(22) Date of filing: 31.12.2024
(51) Int. Cl.: G06F 1/16, H01Q 1/24

(54) **ELECTRONIC DEVICE COMPRISING ANTENNA AND FOLDABLE HOUSING**

(30) Priority: 08.02.2024 KR 20240020029; 03.06.2024 KR 20240072602
(71) Applicant: Samsung Electronics Co., Ltd, Suwon-si, Gyeonggi-do 16677 (KR)
(72) Inventor: CHOI, Donguk, Suwon-si, Gyeonggi-do 16677 (KR); YEO, Hyungsok, Suwon-si, Gyeonggi-do 16677 (KR); FEYGENSON, Oleg, Suwon-si, Gyeonggi-do 16677 (KR); IVANOV, Igor, Suwon-si, Gyeonggi-do 16677 (KR); HWANG, Seonho, Suwon-si, Gyeonggi-do 16677 (KR)
(74) Representative: HGF
(86) International application number: PCT/KR2024/021575
(87) International publication number: WO 2025/170190

(57) **Abstract**

A foldable electronic device according to an embodiment includes a foldable housing including a first housing part, a second housing part, and a third housing part. In a folded state of the foldable housing, a first end of a first non-conductive portion in a first lateral side of the first housing part and a first end of a second non-conductive portion in a second lateral side of the second housing part are disposed adjacent to each other, the first end of the first non-conductive portion is disposed on a first virtual line orthogonal to a front side of the first housing part, and at least a portion between the first end of the first non-conductive portion and a second end of the first non-conductive portion or at least a portion between the first end of the second non-conductive portion and a second end of the second non-conductive portion is not disposed on the first virtual line.

## Description

### [Technical Field]

The present disclosure relates to an electronic device including an antenna and a foldable housing.

### [Background Art]

An electronic device may include antennas for communication with an external electronic device. The antenna may include an antenna radiator for radiating electromagnetic waves to the outside. The antenna radiator may include a conductive material (e.g., metal).

The electronic device may include a housing having a foldable structure. For example, the foldable housing may include a plurality of housing parts. The electronic device may use at least a portion of a lateral side of the foldable housing as an antenna radiator.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

A foldable electronic device is provided. The foldable electronic device may comprise wireless communication circuitry. The foldable electronic device may comprise a foldable housing including a first housing part and a second housing part rotatably coupled to the first housing part. A first lateral side of the first housing part may include a first conductive portion electrically connected to the wireless communication circuitry, and a first non-conductive portion contacted with the first conductive portion. A second lateral side of the second housing part may include a second conductive portion, and a second non-conductive portion contacted with the second conductive portion. In a folded state of the foldable electronic device, a first end of the first non-conductive portion and a first end of the second non-conductive portion may be disposed adjacent to each other, and a second end of the first non-conductive portion opposite to the first end of the first non-conductive portion and a second end of the second non-conductive portion opposite to the first end of the second non-conductive portion may be disposed distant to each other. In the folded state of the foldable electronic device, the first end of the first non-conductive portion may be disposed on a first virtual line extending in a direction substantially orthogonal to a rear side of the first housing part. At least a portion of the first non-conductive portion between the first end of the first non-conductive portion and the second end of the first non-conductive portion or at least a portion of the second non-conductive portion between the first end of the second non-conductive portion and the second end of the second non-conductive portion may be not disposed on the first virtual line.

The first conductive portion may be bounded on one side by the first non-conductive portion such that the first conductive portion is isolated from one or more other conductive components of the foldable electronic device by the first non-conductive portion. The second conductive portion may be bounded on one side by the second non-conductive portion such that the second conductive portion is isolated from one or more other conductive components of the foldable electronic device by the second non-conductive portion.

In a folded state of the foldable electronic device, the first end of the first non-conductive portion and the first end of the second non-conductive portion may be disposed proximate to each other or in contact with each other. In a folded state of the foldable electronic device, the second end of the first non-conductive portion and the second end of the second non-conductive may be disposed distal to the first end of the first non-conductive portion and the first end of the second non-conductive portion..

A foldable electronic device is provided. The foldable electronic device may comprise wireless communication circuitry. The foldable electronic device may comprise a hinge assembly. The foldable electronic device may include a foldable housing accommodating the wireless communication circuitry and including a first housing part and a second housing part that are rotatably coupled to the hinge assembly. A first lateral side of the first housing part may include a first conductive portion electrically connected to the wireless communication circuitry and a first non-conductive portion contacted with the first conductive portion. A second lateral side of the second housing part may include a second conductive portion and a second non-conductive portion contacted with the second conductive portion. In the folded state of the foldable electronic device, when viewed in a direction orthogonal to a rear side of the foldable housing, a first end of the first non-conductive portion facing the second housing part and a first end of the second non-conductive portion facing the first housing part may be disposed to overlap each other. In the folded state of the foldable electronic device, when viewed in the direction orthogonal to the rear side of the foldable housing, a second end of the first non-conductive portion opposite to the first end of the first non-conductive portion and a second end of the second non-conductive portion opposite to the first end of the second non-conductive portion may be disposed so as not to overlap each other.

A foldable electronic device is provided. The foldable electronic device may comprise wireless communication circuitry. The foldable electronic device may comprise a foldable housing including a first housing part and a second housing part rotatably coupled to the first housing part. A first lateral side of the first housing part may include a first conductive portion electrically connected to the wireless communication circuitry, and a first non-conductive portion contacted with the first conductive portion. A second lateral side of the second housing part may include a second conductive portion, and a second non-conductive portion contacted with the second conductive portion. In a folded state of the foldable electronic device, a first end of the first non-conductive portion and a first end of the second non-conductive portion may be disposed adjacent to each other, and a second end of the first non-conductive portion opposite to the first end of the first non-conductive portion and a second end of the second non-conductive portion opposite to the first end of the second non-conductive portion may be disposed distant to each other. An average or mean length of the first conductive portion, measured along an outer surface of the first conductive portion in a direction parallel to a rear side of the foldable electronic device, is different to an average or mean length of the second conductive portion, measured along an outer surface of the second conductive portion in a direction parallel to a rear side of the foldable electronic device.

The average or mean length of the first conductive portion may be defined as an average or mean value of all possible measurements made along an outer surface of the first conductive portion parallel to a rear side of the foldable electronic device. The average or mean length of the second conductive portion may be defined as an average or mean value of all possible measurements made along an outer surface of the second conductive portion parallel to a rear side of the foldable electronic device.

A foldable electronic device is provided. The foldable electronic device may comprise wireless communication circuitry. The foldable electronic device may comprise a foldable housing including a first housing part and a second housing part rotatably coupled to the first housing part. A first lateral side of the first housing part may include a first conductive portion electrically connected to the wireless communication circuitry, and a first non-conductive portion contacted with the first conductive portion. A second lateral side of the second housing part may include a second conductive portion, and a second non-conductive portion contacted with the second conductive portion. In a folded state of the foldable electronic device, a first end of the first non-conductive portion and a first end of the second non-conductive portion may be disposed adjacent to each other, and a second end of the first non-conductive portion opposite to the first end of the first non-conductive portion and a second end of the second non-conductive portion opposite to the first end of the second non-conductive portion may be disposed distant to each other. A greatest length of the first conductive portion is different to a greatest length of the second conductive portion.

The greatest length of a conductive portion may be defined as the largest measurement that can be made through the conductive portion in a straight line without leaving the conductive portion.

A foldable electronic device is provided. The foldable electronic device may comprise wireless communication circuitry. The foldable electronic device may comprise a foldable housing including a first housing part and a second housing part rotatably coupled to the first housing part. A first lateral side of the first housing part may include a first conductive portion electrically connected to the wireless communication circuitry, and a first non-conductive portion contacted with the first conductive portion. A second lateral side of the second housing part may include a second conductive portion, and a second non-conductive portion contacted with the second conductive portion. In a folded state of the foldable electronic device, a first end of the first non-conductive portion and a first end of the second non-conductive portion may be disposed adjacent to each other, and a second end of the first non-conductive portion opposite to the first end of the first non-conductive portion and a second end of the second non-conductive portion opposite to the first end of the second non-conductive portion may be disposed distant to each other. The foldable housing further includes a third housing part rotatably coupled to the first housing part or the second housing part, such that the second housing part is positioned between the first housing part and the third housing part in the folded state of the foldable electronic device. A third lateral side of the third housing part may include a third conductive portion and a third non-conductive portion contacted with the third conductive portion. In the folded state of the foldable electronic device, the second end of the second non-conductive portion and a first end of the third non-conductive portion are disposed adjacent to each other, and the first end of the second non-conductive portion and a second end of the third non-conductive portion opposite to the first end of the third non-conductive portion are disposed distant to each other. A greatest length of the first conductive portion is different to a greatest length of the third conductive portion.

### [Description of the Drawings]

FIG. 1 is a block diagram of an electronic device in a network environment according to an embodiment.
FIG. 2 is a block diagram of an electronic device according to an embodiment.
FIG. 3A illustrates a process in which an electronic device according to an embodiment is changed from an unfolded state to a folded state.
FIG. 3B illustrates a foldable housing from which a display is omitted in the electronic device of FIG. 3A.
FIGS. 3C and 3D illustrate conductive portions and non-conductive portions of a foldable electronic device according to various embodiments.
FIG. 3E illustrates a foldable electronic device according to an embodiment including a coating layer.
FIGS. 4A, 4B, 4C, and 4D illustrate a foldable electronic device according to various embodiments.
FIG. 4E illustrates a foldable electronic device according to a comparative example.
FIG. 5A illustrates electric fields formed from a first antenna of an electronic device according to an embodiment and a first antenna of an electronic device according to a comparative example.
FIG. 5B illustrates electric fields formed from a second antenna of an electronic device according to an embodiment and a second antenna of an electronic device according to a comparative example.
FIG. 5C is a graph indicating efficiency of the first antenna and efficiency of the second antenna.
FIGS. 6A and 6B illustrate a foldable electronic device according to an embodiment including non-conductive portions having different widths.
FIGS. 7A and 7B illustrate a foldable electronic device according to an embodiment including portions having different extension directions.
FIG. 8 illustrates an example of a second non-conductive portion including portions having different extension directions.
FIG. 9 illustrates a foldable electronic device according to an embodiment.
FIGS. 10A, 10B, 10C, and 10D illustrate examples of a foldable housing that includes only one non-conductive portion in each of lateral sides.
FIGS. 11A, 11B, and 11C illustrate examples of a foldable housing having a structure in which a first length corresponds to a second length.
FIG. 12A is a graph indicating efficiency of a first antenna according to a dielectric constant of a second non-conductive portion.
FIG. 12B is a graph indicating efficiency of a second antenna according to a dielectric constant of a third non-conductive portion.
FIG. 13A is a diagram illustrating a specific absorption rate of an electronic device according to a comparative example.
FIG. 13B is a diagram illustrating a specific absorption rate of an electronic device according to an embodiment.
FIG. 14 illustrates a process in which an electronic device according to an embodiment is changed from an unfolded state to a folded state.
FIGS. 15A, 15B, and 15C illustrate a foldable electronic device according to various embodiments.
FIGS. 16A, 16B, 16C, 16D, and 16E illustrate a foldable electronic device according to various embodiments.

### [Mode for Invention]

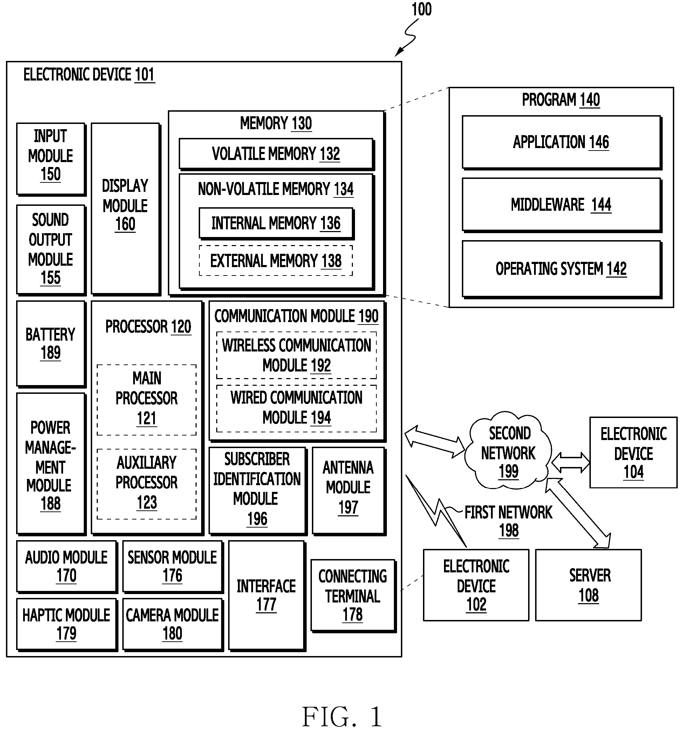

FIG. 1 is a block diagram of an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

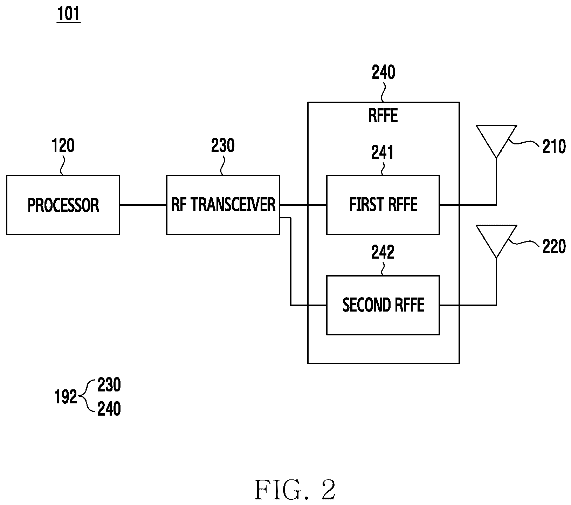

FIG. 2 is a block diagram of an electronic device according to an embodiment.

Referring to FIG. 2, an electronic device 101 according to an embodiment may include a processor 120, wireless communication circuitry 192 (e.g., the wireless communication module 192 of FIG. 1), a first antenna 210, and/or a second antenna 220.

According to an embodiment, the processor 120 may include at least one of an application processor (AP) (e.g., the main processor 121 of FIG. 1) or a communication processor (CP) (e.g., the auxiliary processor 123 of FIG. 1). For example, the wireless communication circuitry 192 may include a radio frequency (RF) transceiver 230 and a radio frequency front end (RFFE) 240.

According to an embodiment, the processor 120 may be configured to control an operation of the electronic device 101. Any function or operation described in the present disclosure may be processed by a processor or a combination of processors. The processor or the combination of processors, which is a circuit that performs processing, may include an application processor (AP) (e.g., a central processing unit (CPU)), a communication processor (CP) (e.g., a modem), a graphic processing unit (e.g., a GPU), a neural processing unit (NPU) (e.g., an artificial intelligence (AI) chip), a wireless-fidelity (Wi-Fi) chip, a Bluetooth chip, a global positioning system (GPS) chip, a near field communication (NFC) chip, connectivity chips, a sensor controller, a touch controller, a finger-print sensor controller, a display drive integrated circuit (DDI), an audio CODEC chip, a universal serial bus (USB) controller, a camera controller, an image processing IC, a microprocessor unit (MPU), a system on chip (SoC), an IC, or a similar circuit.

According to an embodiment, the processor 120 may generate a baseband signal. The processor 120 may control the RF transceiver 230 to process the generated baseband signal. The processor 120 may control the RF transceiver 230 such that a transmission signal is transmitted through the first antenna 210 and/or the second antenna 220. The processor 120 may control the RF transceiver 230 such that the transmission signal is transmitted in a frequency band capable of communicating with an external electronic device.

According to an embodiment, the RF transceiver 230 may be implemented as a single chip (e.g., an RFIC chip) or a portion of a single package. The RF transceiver 230 may include a digital to analog converter (DAC) for converting a digital signal into an analog signal. The RF transceiver 230 may include a mixer and an oscillator (e.g., a local oscillator (LO)) for up-conversion. The RF transceiver 230 may convert a baseband signal generated by the processor 120 into an RF signal. The RF transceiver 230 may include an analog to digital converter (ADC) for converting an analog signal into a digital signal. The RF transceiver 230 may include a mixer and an oscillator for down-conversion. The RF transceiver 230 may convert an RF signal received from the first antenna 210 and/or the second antenna 220 into a baseband signal in order to be processed by the processor 120.

According to an embodiment, the RFFE 240 may include a first RFFE 241 for the first antenna 210 and/or a second RFFE 242 for the second antenna 220. For example, the first RFFE 241 and the second RFFE 242 may include a plurality of components electrically connected between the RF transceiver 230 and an antenna (e.g., the first antenna 210 and the second antenna 220). For example, the first RFFE 241 and the second RFFE 242 may include components such as a coupler, a power amplifier (PA), a low noise amplifier (LNA), a switch circuit, and/or a duplexer, but it is not limited thereto.

According to an embodiment, the first antenna 210 and the second antenna 220 may be used to transmit and/or receive a signal on a designated frequency band. The first antenna 210 and the second antenna 220 may be used to transmit and/or receive a signal on different frequency bands. For example, the first antenna 210 may be used to transmit and/or receive a first signal on a first frequency band. The second antenna 220 may be used to transmit and/or receive a second signal on a second frequency band different from the first frequency band. However, it is not limited thereto. For example, the electronic device 101 may include one or more additional antenna, in addition to the first antenna 210 and the second antenna 220 illustrated in FIG. 2.

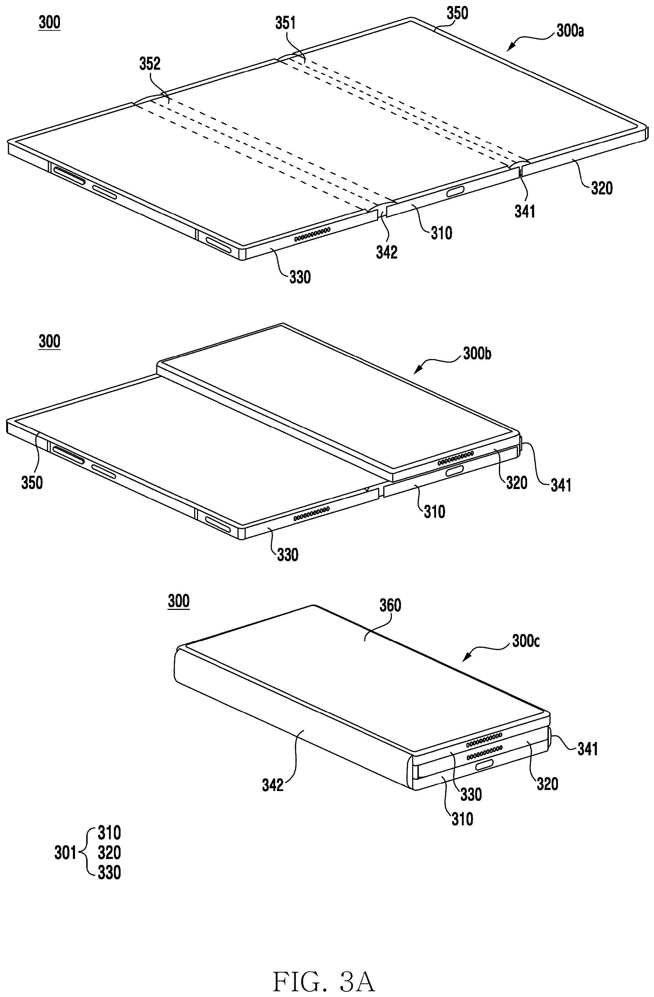

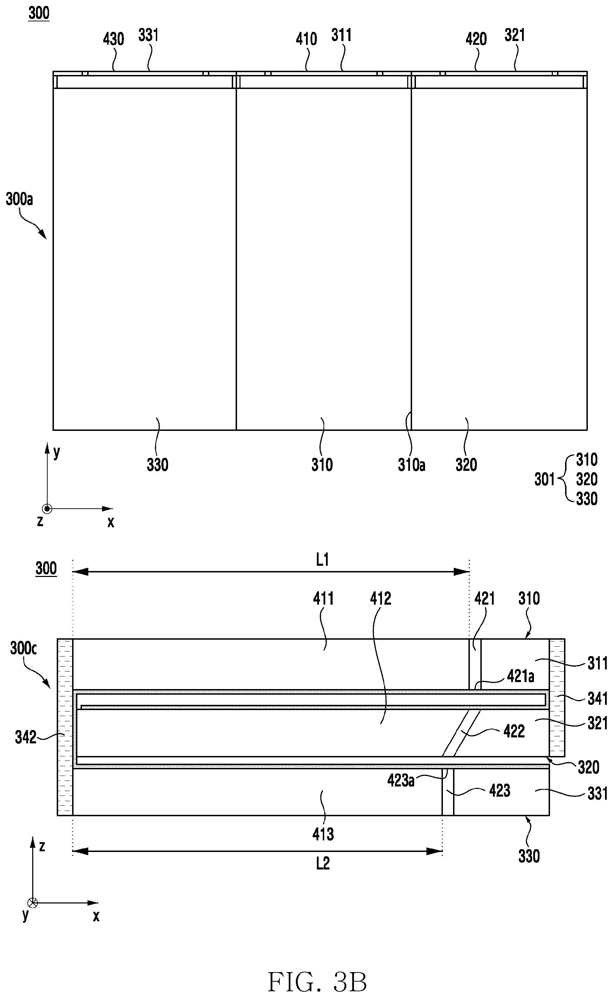

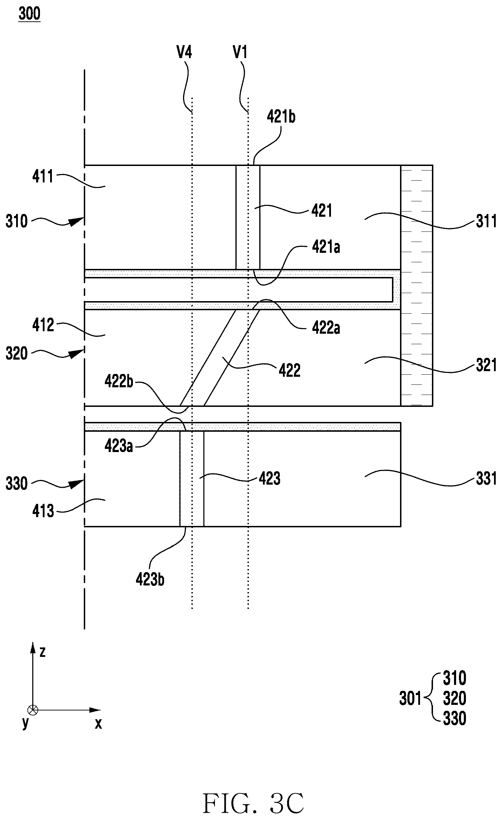

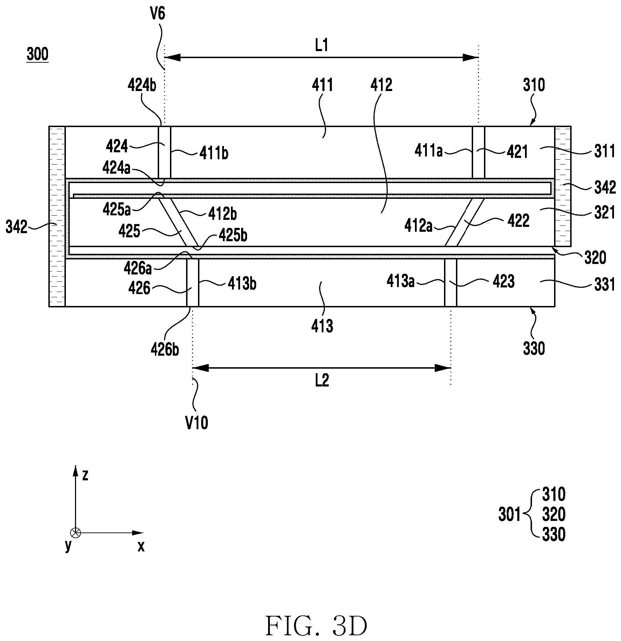

FIG. 3A illustrates a process in which an electronic device according to an embodiment is changed from an unfolded state to a folded state. FIG. 3B illustrates a foldable housing from which a display is omitted in the electronic device of FIG. 3A. FIGS. 3C and 3D illustrate conductive portions and non-conductive portions of a foldable electronic device according to various embodiments.

A foldable electronic device 300 (e.g., the electronic device 101 of FIG. 1) may include a plurality of housing parts that are rotatably coupled. Referring to FIG. 3A, the foldable electronic device 300 may include a foldable housing 301. For example, the foldable housing 301 may include a first housing part 310, a second housing part 320, and a third housing part 330, which are rotatably coupled to each other. In the present disclosure, the foldable housing 301 is described as a structure including the first housing part 310, the second housing part 320, and the third housing part 330, but is not limited thereto. For example, the foldable housing 301 may include four or more housing parts or two housing parts.

For example, the foldable electronic device 300 may include hinge assemblies (e.g., a first hinge assembly 341 and a second hinge assembly 342) for a deformable structure of the foldable housing 301. For example, the hinge assemblies may rotatably couple the first housing part 310, the second housing part 320, and the third housing part 330 with each other. For example, according to a structure in which the housing 301 is folded, a connection relationship between a hinge assembly and housing parts may be different.

Referring to FIG. 3A, the second housing part 320 may be rotatably coupled to a side of the first housing part 310. The third housing part 330 may be rotatably coupled to another side of the first housing part 310 opposite to the side of the first housing part 310. For example, the hinge assembly may include a first hinge assembly 341 that rotatably couples the second housing part 320 to a side of the first housing part 310 and a second hinge assembly 342 that rotatably couples the third housing part 330 to another side of the first housing part 310. The foldable electronic device 300 may have a structure capable of being folded twice by the first hinge assembly 341 and the second hinge assembly 342.

According to an embodiment, the foldable electronic device 300 may include a flexible display 350. The flexible display 350 may be disposed on the first housing part 310, the second housing part 320, and the third housing part 330. The flexible display 350 may define a front side of the foldable electronic device 300. When the foldable housing 301 is folded or unfolded, the flexible display 350 may also be folded or unfolded. For example, the flexible display 350 may include a first bendable portion 351 capable of being folded by rotation of the first housing part 310 and rotation of the second housing part 320, and a second bendable part 352 capable of being folded by rotation of the first housing part 310 and rotation of the third housing part 330.

A first state 300a of FIG. 3A may be referred to as an unfolded state of the foldable electronic device 300. The first state 300a corresponds to a state in which the first housing part 310, the second housing part 320, and the third housing part 330 are fully unfolded. In the unfolded state of the foldable electronic device 300, the first housing part 310, the second housing part 320, and the third housing part 330 may be disposed on substantially the same plane. In the first state 300a, the first bendable portion 351 and the second bendable portion 352 may be substantially flat. The first state 300a may be referred to as an opened state, a flat state, and/or an outspread state in terms of the first housing part 310, the second housing part 320, and the third housing part 330 being fully unfolded. In the first state 300a, the first housing part 310 may be positioned between the second housing part 320 and the third housing part 330.

The second state 300b of FIG. 3A corresponds to a state in which the second housing part 320 is folded with respect to the first housing part 310. In the first state 300a, as the second housing part 320 rotates with respect to the first housing part 310, the foldable electronic device 300 may change from the first state 300a to a second state 300b. For example, the second housing part 320 may rotate in a first rotation direction (e.g., counterclockwise) with respect to the first housing part 310, by the first hinge assembly 341. When the second housing part 320 rotates by about 180 degrees, the second state 300b in which the second housing part 320 is placed on the first housing part 310 may be provided. In the second state 300b, the first bendable portion 351 may be bent. The second state 300b may be referred to as a sub-opened state, a sub-folded state, a half-opened state, a half-folded state, and/or an intermediate state.

A third state 300c of FIG. 3A may be referred to as a folded state of the foldable electronic device 300. The third state 300c corresponds to a state in which the first housing part 310, the second housing part 320, and the third housing part 330 are fully folded. In the folded state of the foldable electronic device 300, when the foldable electronic device 300 is viewed from above, the first housing part 310, the second housing part 320, and the third housing part 330 may overlap each other. In the second state 300b, as the third housing part 330 rotates with respect to the first housing part 310, the foldable electronic device 300 may change from the second state 300b to the third state 300c. For example, the third housing part 330 may rotate in a second rotation direction (e.g., clockwise) opposite to the first rotation direction with respect to the first housing part 310, by the second hinge assembly 342. In the second state 300b, when the third housing part 330 rotates by about 180 degrees, the third state 300c in which the third housing part 330 is placed on the second housing part 320 may be provided. In the third state 300c, the first bendable portion 351 and the second bendable portion 352 may be bent. In the third state 300c, the flexible display 350 may not be exposed to the outside of the foldable electronic device 300 by being covered by the first housing part 310, the second housing part 320, and/or the third housing part 330. In the third state 300c, the second housing part 320 may be positioned between the first housing part 310 and the third housing part 330. In the third state 300c, a cover display 360 disposed on a rear side of the third housing part 330 may be exposed to the outside. The third state 300c may be referred to as a closed state in terms of the first housing part 310, the second housing part 320, and the third housing part 330 being fully folded.

According to an embodiment, the first hinge assembly 341 and the second hinge assembly 342 may be different. For example, in the third state 300c, a width of the second hinge assembly 342 may be wider than a width of the first hinge assembly 341 so that the second housing part 320 may be positioned between the first housing part 310 and the third housing part 330. In terms of having different widths, the first hinge assembly 341 may be referred to as a narrow hinge, and the second hinge assembly 342 may be referred to as a wide hinge.

Referring to FIG. 3B, in the unfolded state of the foldable electronic device 300 (e.g., the first state 300a of FIG. 3A), the first housing part 310 may be positioned between the second housing part 320 and the third housing part 330. In the folded state of the foldable electronic device 300 (e.g., the third state 300c of FIG. 3A), the second housing part 320 may be positioned between the first housing part 310 and the third housing part 330.

The foldable electronic device 300 according to an embodiment may be configured to communicate with an external electronic device using an antenna (e.g., the first antenna 210 and/or the second antenna 220 of FIG. 2). For example, an antenna radiator for transmitting and/or receiving a signal may be formed along a portion of a lateral side of the foldable housing 301. For example, the foldable housing 301 may include a plurality of conductive portions and a plurality of non-conductive portions that form at least a portion of the lateral side of the foldable housing 301. At least one of the plurality of conductive portions may be configured to function as an antenna radiator for transmitting and/or receiving a signal by being electrically connected with wireless communication circuitry (e.g., the wireless communication circuitry 192 of FIG. 2). The plurality of non-conductive portions may separate a conductive portion functioning as an antenna radiator from other conductive portions.

Referring to FIG. 3B, the first housing part 310 may include a first lateral side 311. Among lateral sides of the first housing part 310, the first lateral side 311 may be a lateral side substantially orthogonal to a lateral side 310a rotatably coupled to the third housing part 330. For example, the lateral side 310a may be disposed along a boundary between the first housing part 310 and the third housing part 330. The lateral side 310a may be rotatably coupled to the second housing part 320 through a first hinge assembly (e.g., the first hinge assembly 341 of FIG. 3A).

According to an embodiment, the second housing part 320 may include a second lateral side 321. In the unfolded state (e.g., the first state 300a) of the foldable electronic device 300, the second lateral side 321 may be parallel to the first lateral side 311 of the first housing part 310. The second lateral side 321 may overlap the first lateral side 311 when the foldable electronic device 300 in the folded state (e.g., the third state 300c) is viewed from above (e.g., the z-axis direction). For example, in the folded state of the foldable electronic device 300, the second lateral side 321 may be adjacent to the first lateral side 311.

According to an embodiment, the third housing part 330 may include a third lateral side 331. In the unfolded state of the foldable electronic device 300, the third lateral side 331 may be parallel to the first lateral side 311 and the second lateral side 321. When the foldable electronic device 300 in the folded state is viewed from above (e.g., the z-axis direction), the third lateral side 331 may overlap the first lateral side 311 and the second lateral side 321. Referring to FIG. 3B, in the unfolded state of the foldable electronic device 300, the first lateral side 311 may be positioned between the second lateral side 321 and the third lateral side 331. In the folded state of the foldable electronic device 300, the second lateral side 321 may be positioned between the first lateral side 311 and the third lateral side 331. The first lateral side 311, the second lateral side 321, and the third lateral side 331 may face the same direction (e.g., the +y direction).

According to an embodiment, the first lateral side 311 of the first housing part 310 may include a first conductive portion 411 and a first non-conductive portion 421. For example, the first conductive portion 411 and the first non-conductive portion 421 may form at least a portion of the first lateral side 311. The first non-conductive portion 421 may be contacted with the first conductive portion 411.

According to an embodiment, the second lateral side 321 may include a second conductive portion 412 and a second non-conductive portion 422. For example, the second conductive portion 412 and the second non-conductive portion 422 may form at least a portion of the second lateral side 321. The second non-conductive portion 422 may be contacted with the second conductive portion 421.

According to an embodiment, the third lateral side 331 may include a third conductive portion 413 and a third non-conductive portion 423. For example, the third conductive portion 413 and the third non-conductive portion 423 may form at least a portion of the third lateral side 331. The third non-conductive portion 423 may be contacted with the third conductive portion 413.

As illustrated in FIG. 3B, the first lateral side 311, the second lateral side 321, and the third lateral side 331 are illustrated to be disposed at an upper portion (e.g., the +y direction) of the foldable housing 301, but the present disclosure is not limited thereto. For example, the first lateral side 311, the second lateral side 321, and the third lateral side 331 may also be disposed at a lower portion (e.g., the -y direction) of the foldable housing 301.

According to an embodiment, the first conductive portion 411 and/or the third conductive portion 413 may be configured to function as an antenna radiator. The first conductive portion 411 may include a first feeding point electrically connected to wireless communication circuitry (e.g., the wireless communication circuitry 192 of FIG. 2) and/or a first ground point electrically connected to a ground of the foldable electronic device 300. For example, when a feeding signal is provided from the wireless communication circuitry 192 to the first feeding point, the first conductive portion 410 may function as an antenna radiator by forming an electromagnetic field for transmitting and/or receiving a wireless signal. For example, an antenna (e.g., the first antenna 210 of FIG. 2) including at least a portion of the first conductive portion 411 may be configured to function as an antenna for transmitting and/or receiving a first signal on a first frequency band. The first conductive portion 411 may be referred to as a radiator of the first antenna. For example, the ground of the foldable electronic device 300 electrically connected to the first ground point may be referred to as a bracket disposed inside the foldable housing 301, but is not limited thereto.

In an embodiment, the third conductive portion 413 may include a second feeding point electrically connected to the wireless communication circuitry 192 and/or a second ground point electrically connected to the ground of the foldable electronic device 300. For example, when a feeding signal is provided from the wireless communication circuitry 192 to the second feeding point, the third conductive portion 413 may be configured to function as an antenna radiator by forming an electromagnetic field for transmitting and/or receiving a wireless signal. For example, an antenna (e.g., the second antenna 220 of FIG. 2) including at least a portion of the third conductive portion 413 may function as an antenna for transmitting and/or receiving a second signal on a second frequency band. The third conductive portion 413 may be referred to as a radiator of the second antenna.

According to an embodiment, a first length L1 of the first conductive portion 411 may be different from a second length L2 of the third conductive portion 413. The first length L1 of the first conductive portion 411 may be referred to as a length from an end of the first conductive portion 411 connected to the second hinge assembly 342 to another end of the first conductive portion 411 contacted with the first non-conductive portion 421. A second length L2 of the third conductive portion 413 may be referred to as a length from an end of the third conductive portion 413 connected to the second hinge assembly 342 to another end of the third conductive portion 413 contacted with the third non-conductive portion 423. The first length L1 may be longer than the second length L2. An operating frequency of an antenna may be determined based on an electrical length of an antenna radiator. Since the first length L1 is different from the second length L2, the foldable electronic device 300 may be configured to transmit and/or receive signals on various frequency bands.

In an embodiment, since the first length L1 is longer than the second length L2, the first frequency band may be lower than the second frequency band. For example, the first frequency band may include a low band. For example, the second frequency band may include a mid-band, a high-band, and/or an ultra-high band. For example, the second frequency band may include a Wi-Fi signal band and/or a GPS signal band. According to an embodiment, the foldable electronic device 300 may be configured to transmit and/or receive signals on various frequency bands using the first antenna and the second antenna. However, it is not limited thereto. For example, the first length L1 may be substantially the same as the second length L2.

According to an embodiment, when the foldable electronic device 300 in the folded state is viewed from above, the first lateral side 311, the second lateral side 321, and the third lateral side 331 may overlap. In the folded state of the foldable electronic device 300, as the first conductive portion 411 and the third conductive portion 413 functioning as an antenna radiator are adjacent to the second conductive portion 412 of the second lateral side 321, communication performance of the foldable electronic device 300 may be deteriorated. For example, when a feed signal is provided to the first conductive portion 411 and/or the third conductive portion 413, a flow of radiation current may be formed along the first conductive portion 411 and/or the third conductive portion 413. An electromagnetic field may be formed around the first conductive portion 411 and/or the third conductive portion 413 by the radiation current, and signals may be radiated to an external electronic device through the electromagnetic field. When the signals are radiated, since the second conductive portion 412, which is a conductor, blocks the first conductive portion 411 and/or the third conductive portion 413, it may be difficult to radiate signals in a direction blocked by the second conductive portion 412. In the folded state, the communication performance of the foldable electronic device 300 may be deteriorated.

In order to reduce deterioration of the communication performance, the second non-conductive portion 422 may be disposed within the second lateral side 321 in relation to each of the first non-conductive portion 421 and the third non-conductive portion 423. According to an embodiment, in the folded state of the foldable electronic device 300, when viewed in a direction (e.g., the z-axis direction) orthogonal to the rear side of the foldable housing 301, both ends of the second non-conductive portion 422 may be disposed to overlap an end of the first non-conductive portion 421 and an end of the third non-conductive portion 423, respectively. According to an embodiment, when signals are radiated through the first conductive portion 411 and/or the third conductive portion 413, an electric field may be strongly formed in the first non-conductive portion 421 and/or the third non-conductive portion 423. The second non-conductive portion 422 may be disposed adjacent to or overlapping the first non-conductive portion 421 and/or the third non-conductive portion 423 in which the electric field is strongly formed, thereby reducing the effect of blocking signals radiated from the first conductive portion 411 and/or the third conductive portion 413 and helping to form an electric field.

In an embodiment, when the second non-conductive portion 422 is disposed to overlap only one of the first non-conductive portion 421 or the third non-conductive portion 423, communication performance of either the first antenna or the second antenna may be improved, while it may be difficult to expect an improvement in the communication performance of the other. For example, when the second non-conductive portion 422 is disposed to overlap only the first non-conductive portion 421, communication performance of the first antenna may be improved, while the communication performance of the second antenna is not improved.

According to an embodiment, in the folded state of the foldable electronic device 300, the foldable electronic device 300 may have a structure for improving both the communication performance of the first antenna and the communication performance of the second antenna. When the first length L1 and the second length L2 are different, the first non-conductive portion 421 may not be positioned on the same line as the third non-conductive portion 423. According to an embodiment, when viewed in a direction orthogonal to the rear side of the foldable housing 301, the second non-conductive portion 422 may be disposed to overlap with each of a first end 421a of the first non-conductive portion 421 and a first end 423a of the third non-conductive portion 423.

Referring to FIG. 3C, a folded state (e.g., the third state 300c of FIG. 3A) of the foldable electronic device 300 is illustrated. As described above, in the folded state of the foldable electronic device 300, the second housing part 320 may be positioned between the first housing part 310 and the third housing part 330.

Referring to FIG. 3C, in the folded state of the foldable electronic device 300, the first non-conductive portion 421 may extend from the first end 421a of the first non-conductive portion 421 facing the second housing part 320 to a second end 421b of the first non-conductive portion 421 opposite the first end 421a of the first non-conductive portion 421. In the folded state of the foldable electronic device 300, the second non-conductive portion 422 may extend from a first end 422a of the second non-conductive portion 422 facing the first housing part 310 to a second end 422b of the second non-conductive portion 422 opposite to the first end 422a of the second non-conductive portion 422. In the folded state of the foldable electronic device 300, the third non-conductive portion 423 may extend from a first end 423a of the third non-conductive portion 423 facing the second housing part 320 to a second end 423b of the third non-conductive portion 423 opposite to the first end 423a of the third non-conductive portion 423.

According to an embodiment, in the folded state of the foldable electronic device 300, the first end 421a of the first non-conductive portion 421 facing the second housing part 320 and the first end 422a of the second non-conductive portion 422 facing the first housing part 310 may be disposed adjacent to each other.

According to an embodiment, in the folded state of the foldable electronic device 300, the second end 421b of the first non-conductive portion 421 and the second end 422b of the second non-conductive portion 422 may be disposed distant to each other.

According to an embodiment, in the folded state of the foldable electronic device 300, the second end 422b of the second non-conductive portion 422 and the first end 423a of the third non-conductive portion 423 may be disposed adjacent to each other.

According to an embodiment, in the folded state of the foldable electronic device 300, the first end 422a of the second non-conductive portion 422 and the second end 423b of the third non-conductive portion 423 may be disposed distant to each other.

According to an embodiment, in the folded state of the foldable electronic device 300, the first end 421a of the first non-conductive portion 421 may be disposed on a first virtual line V1 extending in a direction (e.g., the z-axis direction) orthogonal to a rear side of the first housing part 310. According to an embodiment, in a folded state of the foldable electronic device 300, at least a portion of the first non-conductive portion 421 between the first end 421a of the first non-conductive portion 421 and the second end 421b of the first non-conductive portion 421 or at least a portion of the second non-conductive portion 422 between the first end 422a of the second non-conductive portion 422 and the second end 422b of the second non-conductive portion 422 may not be disposed on the first virtual line V1. Herein, the first virtual line V1 may be a line passing through the first end 421a of the first non-conductive portion 421 among virtual lines extending in a direction orthogonal to the rear side of the first housing part 310. In a case of the example illustrated in FIG. 3C, the first non-conductive portion 421 is disposed on the first virtual line V1, but at least a portion of the second non-conductive portion 422 is not disposed on the first virtual line V1, and thus the structure may be satisfied.

According to an embodiment, in the folded state of the foldable electronic device 300, the second end 422b of the second non-conductive portion 422 may be disposed on a fourth virtual line V4 extending in a direction (e.g., the z-axis direction) orthogonal to a rear side of the second housing part 320. According to an embodiment, at least a portion of the second non-conductive portion 422 between the first end 422a of the second non-conductive portion 422 and the second end 422b of the second non-conductive portion 422, or at least a portion of the third non-conductive portion 423 between the first end 423a of the third non-conductive portion 423 and the second end 423b of the third non-conductive portion 423 may not be disposed on the fourth virtual line V4. Herein, the fourth virtual line V4 may be a line passing through the first end 423a of the third non-conductive portion 423 among virtual lines extending in a direction orthogonal to a rear side of the first housing part 310. In a case of the embodiment illustrated in FIG. 3C, the third non-conductive portion 423 is disposed on the fourth virtual line V4, but at least a portion of the second non-conductive portion 422 is not disposed on the fourth virtual line V4, and thus the structure may be satisfied.

For example, in the folded state of the foldable electronic device 300, the first end 422a of the second non-conductive portion 422 may be disposed on the first virtual line V1, and at least a portion of the second non-conductive portion 422 between the first end 422a of the second non-conductive portion 422 and the second end 422b of the second non-conductive portion 422 may not be disposed on the first virtual line V1. In the folded state of the foldable electronic device 300, the second end 422b of the second non-conductive portion 422 may be disposed on the fourth virtual line V4, and at least a portion of the second non-conductive portion 422 between the first end 422a of the second non-conductive portion 422 and the second end 422b of the second non-conductive portion 422 may not be disposed on the fourth virtual line V4.

Referring to FIG. 3D, the foldable electronic device 300 may further include a fourth non-conductive portion 424, a fifth non-conductive portion 425, and a sixth non-conductive portion 426.

According to an embodiment, the first lateral side 311 may further include the fourth non-conductive portion 424. For example, the first conductive portion 411 may be disposed between the first non-conductive portion 421 and the fourth non-conductive portion 424. The first non-conductive portion 421 may be contacted with an end 411a of the first conductive portion 411, and the fourth non-conductive portion 424 may be contacted with another end 411b of the first conductive portion 411. For example, a first length L1 of the first conductive portion 411 may correspond to a distance between the first non-conductive portion 421 and the fourth non-conductive portion 424.

According to an embodiment, the second lateral side 321 may further include the fifth non-conductive portion 425. For example, the second conductive portion 412 may be disposed between the second non-conductive portion 422 and the fifth non-conductive portion 425. The second non-conductive portion 422 may be contacted with an end 412a of the second conductive portion 412, and the fifth non-conductive portion 425 may be contacted with another end 412b of the second conductive portion 412.

According to an embodiment, the third lateral side 331 may further include the sixth non-conductive portion 426. For example, the third conductive portion 413 may be disposed between the third non-conductive portion 423 and the sixth non-conductive portion 426. The third non-conductive portion 423 may be contacted with an end 413a of the third conductive portion 413, and the sixth non-conductive portion 426 may be contacted with another end 413b of the third conductive portion 413.

The first length L1 may be different from the second length L2. When the first length L1 is different from the second length L2, the first non-conductive portion 421 may be misaligned with the third non-conductive portion 423, and the fourth non-conductive portion 424 may be misaligned with the sixth non-conductive portion 426. Since the first length L1 is different from the second length L2, an operating frequency of an antenna including the first conductive portion 411 may be different from an operating frequency of an antenna including the third conductive portion 413.

According to an embodiment, an arrangement structure of the fourth non-conductive portion 424, the fifth non-conductive portion 425, and the sixth non-conductive portion 426 may correspond to an arrangement structures of the first non-conductive portion 421, the second non-conductive portion 422, and the third non-conductive portion 423.

Referring to FIG. 3d, in the folded state of the foldable electronic device 300, the fourth non-conductive portion 424 may extend from a first end 424a of the fourth non-conductive portion 424 facing the second housing part 320 to a second end 424b of the fourth non-conductive portion 424 opposite the first end 424a of the fourth non-conductive portion 424. In the folded state, the fifth non-conductive portion 425 may extend from a first end 425a of the fifth non-conductive portion 425 facing the first housing part 310 to the second end 425b of the fifth non-conductive portion 425 opposite the first end 425a of the fifth non-conductive portion 425. In the folded state, the third non-conductive portion 426 may extend from a first end 426a of the third non-conductive portion 426 facing the second housing part 320 to a second end 426b of the third non-conductive portion 426 opposite the first end 426a of the third non-conductive portion 426.

According to an embodiment, in the folded state of the foldable electronic device 300, the first end 424a of the fourth non-conductive portion 424 may be disposed on a sixth virtual line V6 extending in a direction (e.g., the z-axis direction) orthogonal to a rear side of the first housing part 310. According to an embodiment, in the folded state of the foldable electronic device 300, at least a portion of the fourth non-conductive portion 424 between the first end 424a of the fourth non-conductive portion 424 and the second end 424b of the fourth non-conductive portion 424, or at least a portion of the fifth non-conductive portion 425 between the first end 425a of the fifth non-conductive portion 425 and the second end 425b of the fifth non-conductive portion 425 may not be disposed on the sixth virtual line V6. The sixth virtual line V6 may be a line passing through the first end 424a of the fourth non-conductive portion 424, among virtual lines extending in a direction orthogonal to the rear side of the first housing part 310.

According to an embodiment, in the folded state of the foldable electronic device 300,the second end 425b of the fifth non-conductive portion 425 may be disposed on a tenth virtual line V10 extending in a direction (e.g., the z-axis direction) orthogonal to a rear side of the second housing part 320. According to an embodiment, at least a portion of the fifth non-conductive portion 425 between the first end 425a of the fifth non-conductive portion 425 and the second end 425b of the fifth non-conductive portion 425, or at least a portion of the sixth non-conductive portion 426 between the first end 426a of the sixth non-conductive portion 426 and the second end 426b of the sixth non-conductive portion 426 may not be disposed on the tenth virtual line V10. The tenth virtual line V10 may be a line passing through the first end 426a of the sixth non-conductive portion 426 among virtual lines extending in a direction orthogonal to the rear side of the first housing part 310.

For example, in the folded state of the foldable electronic device 300, the first end 425a of the fifth non-conductive portion 425 may be disposed on the sixth virtual line V6, and at least a portion of the fifth non-conductive portion 425 between the first end 425a of the fifth non-conductive portion 425 and the second end 425b of the fifth non-conductive portion 425 may not be disposed on the sixth virtual line V6. In the folded state of the foldable electronic device 300, the second end 425b of the fifth non-conductive portion 425 may be disposed on the tenth virtual line V10, and at least a portion of the fifth non-conductive portion 425 between the first end 425a of the fifth non-conductive portion 425 and the second end 425b of the fifth non-conductive portion 425 may not be disposed on the tenth virtual line V10.

When the first conductive portion 411 and/or the third conductive portion 413 radiate signals by the second non-conductive portion 422 and/or the fifth non-conductive portion 425 satisfying the structure, since the distribution of the electric field is strongly concentrated on a portion contacted with the non-conductive portions 421 and 423, efficiency of the first antenna and/or efficiency of the second antenna may be improved. Hereinafter, examples of the first non-conductive portion 421, the second non-conductive portion 422, and the third non-conductive portion 423 according to various embodiments will be described.

According to an embodiment, the first non-conductive portion 421 may be symmetrical to the fourth non-conductive portion 424 with respect to a central portion of the first housing part 310. The second non-conductive portion 422 may be symmetrical to the fifth non-conductive portion 425 with respect to a central portion of the second housing part 320. The third non-conductive portion 423 may be symmetrical to the sixth non-conductive portion 426 with respect to a central portion of the third housing part 330.

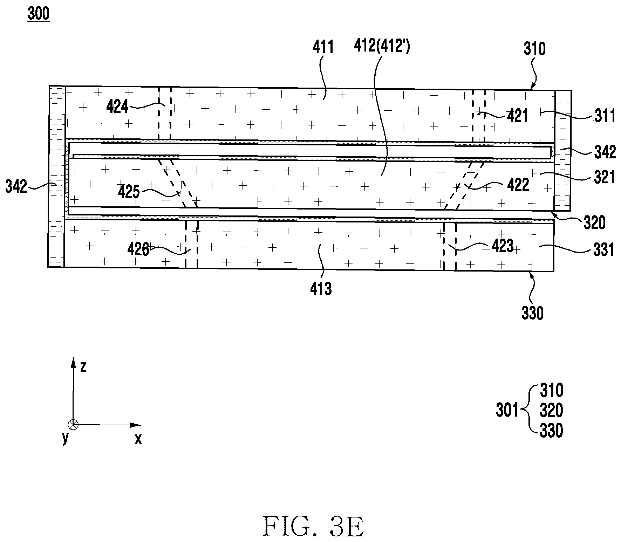

FIG. 3E illustrates a foldable electronic device according to an embodiment including a coating layer.

According to an embodiment, the foldable electronic device 300 may include a coating layer disposed on the first lateral side 311, the second lateral side 321, and the third lateral side 331. The coating layer is referred to in FIG. 3E as a hatching represented in the first lateral side 311, the second lateral side 321, and the third lateral side 331. The coating layer may be used to improve the aesthetics of the foldable electronic device 300 by being visible from the outside of the foldable electronic device 300. For example, the appearance of the foldable electronic device 300 may be damaged by a structure in which the non-conductive portions 421, 422, 423, 424, 425, and 426 are arranged not parallel to each other. According to an embodiment, the coating layer may cover the conductive portions 411, 412, and 413, and the non-conductive portions 421, 422, 423, 424, 425, and 426 from the outside by covering the first lateral side 311, the second lateral side 321, and the third lateral side 331.

According to an embodiment, the coating layer may improve the appearance of the foldable electronic device 300 by having a design or a pattern on a surface exposed to the outside. The coating layer may have an aligned pattern, which covers all of the conductive portions 411, 412, 413 and non-conductive portions 421, 422, 423, 424, 425, and 426, or is visible from the outside. For example, a user may not recognize non-conductive portions 421, 422, 423, 424, 425, and 426 disposed under the coating layer from the outside, but may recognize the aligned non-conductive portions as being disposed, due to the aligned pattern of the coating layer. In an embodiment, the second conductive portion 412 may be replaced with a portion 412' including a non-conductive material.

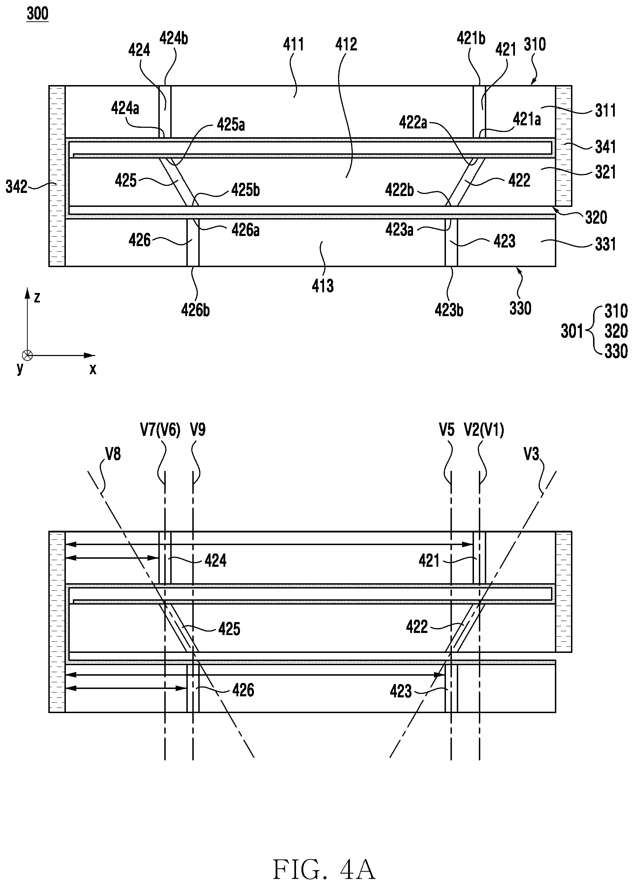

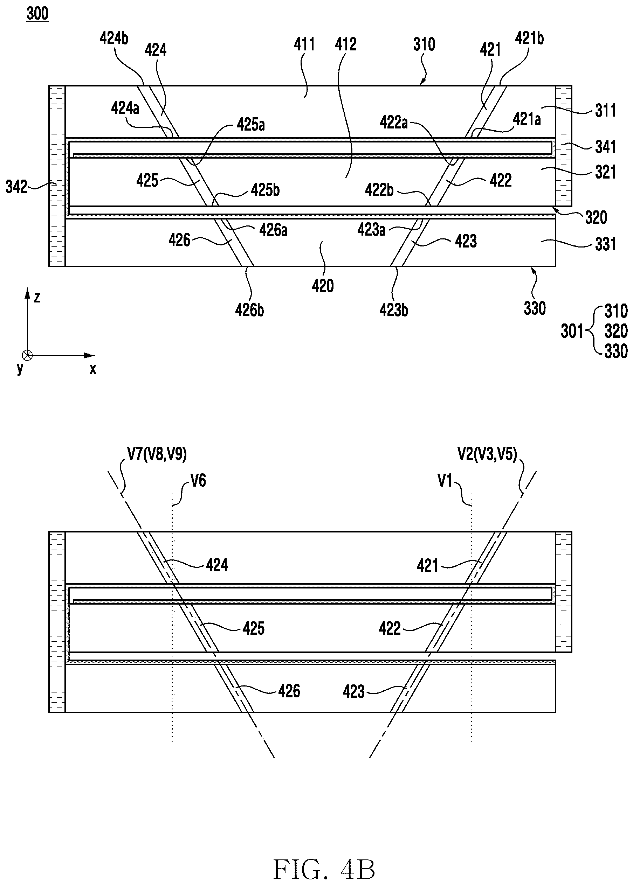

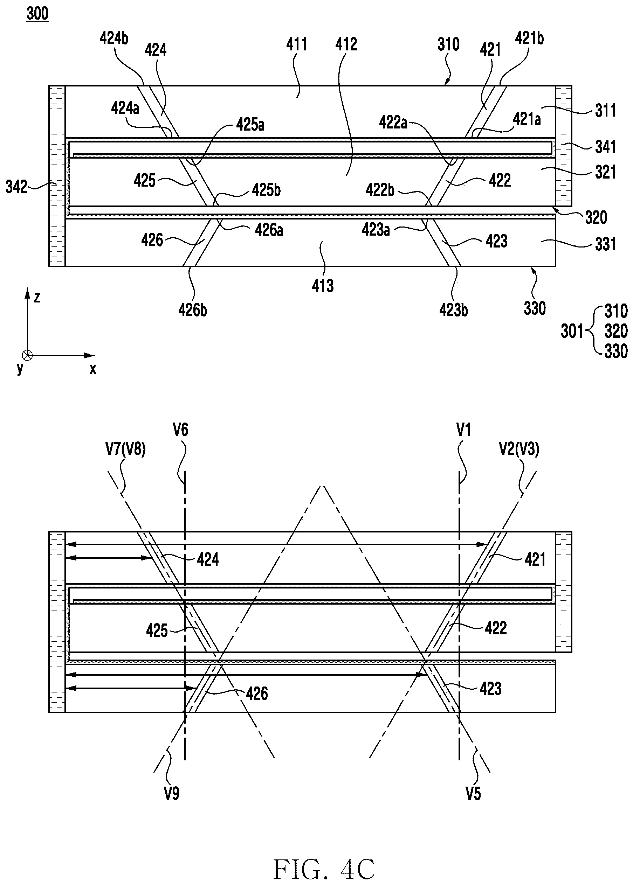

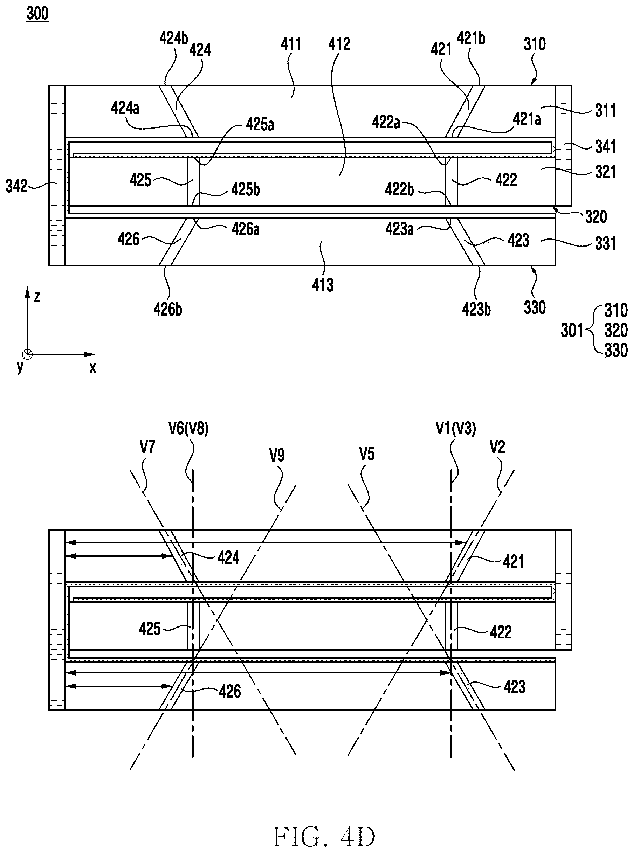

FIGS. 4A, 4B, 4C, and 4D illustrate a foldable electronic device according to various embodiments.

Referring to FIG. 4A, in a folded state of a foldable electronic device 300, a second housing part 320 may be positioned between a first housing part 310 and a third housing part 330. When the foldable electronic device 300 in the folded state is viewed from above (e.g., the z-axis direction, a thickness direction of the foldable electronic device 300, or a direction in which a display faces), a first conductive portion 411, a second conductive portion 412, and a third conductive portion 413 may at least partially overlap.

According to an embodiment, the foldable housing 301 may include various structures satisfying a structure described with reference to FIGS. 3C and 3D. In the embodiments illustrated in FIGS. 4A to 4D, in order to reduce the deterioration of the communication performance described above, a first end 422a of a second non-conductive portion 422 may overlap a first end 421a of a first non-conductive portion 421, when viewed in a direction orthogonal to a rear side of the foldable housing 301. A second end 422b of the second non-conductive portion 422 may overlap a first end 423a of a third non-conductive portion 423 when viewed in the direction. A first end 425a of a fifth non-conductive portion 425 may overlap a first end 424a of a fourth non-conductive portion 424 when viewed in the direction. A second end 425b of the fifth non-conductive portion 425 may overlap a first end 426a of a sixth non-conductive portion 426 when viewed in the direction.

Referring to FIG. 4A, in the folded state of the foldable electronic device 300, the first non-conductive portion 421 and the second non-conductive portion 422 may be disposed such that a second virtual line V2 extending from the first non-conductive portion 421 is different from a third virtual line V3 extending from the second non-conductive portion 422. The second virtual line V2 may be referred to as a virtual line passing through both ends 421a and 421b of the first non-conductive portion 421. The third virtual line V3 may be referred to as a virtual line passing through both ends 422a and 422b of the second non-conductive portion 422. The second virtual line V2 may be a virtual line passing through the center of both ends 421a and 421b of the first non-conductive portion 421. The third virtual line V3 may be referred to as a virtual line passing through the center of both ends 422a and 422b of the second non-conductive portion 422. The second virtual line V2 may be a virtual line which is parallel to a longest edge of the first non-conductive portion 421. The third virtual line V3 may be a virtual line which is parallel to a longest edge of the second non-conductive portion 422 In the folded state of the foldable electronic device 300, the second non-conductive portion 422 and the third non-conductive portion 423 may be disposed such that the third virtual line V3 extending from the second non-conductive portion 422 is different from a fifth virtual line V5 extending from the third non-conductive portion 423. The fifth virtual line V5 may be referred to as a virtual line passing through both ends 423a and 423b of the third non-conductive portion 423. The fifth virtual line V5 may be a virtual line passing through the center of both ends 423a and 423b of the third non-conductive portion 423. The fifth virtual line V5 may be a virtual line which is parallel to a longest edge of the third non-conductive portion 423.

According to an embodiment, the first non-conductive portion 421 and the second non-conductive portion 422 may not extend parallel to each other. For example, an incline may be formed between the first non-conductive portion 421 and the second non-conductive portion 422. According to an embodiment, in the folded state of the foldable electronic device 300, one of the first non-conductive portion 421 and the second non-conductive portion 422 may extend parallel to a first virtual line V1 extending in a direction (e.g., the z-axis direction) orthogonal to a rear side of the foldable housing 301, and another may extend so as to be inclined to the first virtual line V1. For example, as illustrated in FIG. 4A, the first non-conductive portion 421 may extend parallel to the first virtual line V1, and the second non-conductive portion 422 may extend so as to be inclined to the first virtual line V1. In this case, the second virtual line V2 may correspond to the first virtual line V1.

Referring to FIG. 4A, the foldable electronic device 300 may further include a fourth non-conductive portion 424, a fifth non-conductive portion 425, and a sixth non-conductive portion 426. In the folded state of the foldable electronic device 300, the fourth non-conductive portion 424 and the fifth non-conductive portion 425 may be disposed such that a seventh virtual line V7 extending from the fourth non-conductive portion 424 is different from an eighth virtual line V8 extending from the fifth non-conductive portion 425. The seventh virtual line V7 may be referred to as a virtual line passing through both ends 424a and 424b of the fourth non-conductive portion 424. The eighth virtual line V8 may be referred to as a virtual line passing through both ends 425a and 425b of the fifth non-conductive portion 425. In the folded state of the foldable electronic device 300, the fifth non-conductive portion 425 and the sixth non-conductive portion 426 may be disposed such that the eighth virtual line V8 extending from the fifth non-conductive portion 425 is different from a ninth virtual line V9 extending from the sixth non-conductive portion 426. The ninth virtual line V9 may be referred to as a virtual line passing through both ends 426a and 426b of the sixth non-conductive portion 426.

According to an embodiment, the fourth non-conductive portion 424 and the fifth non-conductive portion 425 may not extend in parallel. For example, an incline may be formed between the fourth non-conductive portion 424 and the fifth non-conductive portion 425. According to an embodiment, in the folded state of the foldable electronic device 300, one of the fourth non-conductive portion 424 and the fifth non-conductive portion 425 may extend parallel to a sixth virtual line V6 extending in a direction (e.g., the z-axis direction) orthogonal to a rear side of the foldable housing 301, and another may extend so as to be inclined to the sixth virtual line V6. For example, in the embodiment illustrated in FIG. 4A, the fourth non-conductive portion 424 may extend parallel to the sixth virtual line V6, and the fifth non-conductive portion 425 may extend so as to be inclined to the sixth virtual line V6. In this case, the seventh virtual line V7 may correspond to the sixth virtual line V6.

According to an embodiment, the first conductive portion 411 and/or the third conductive portion 413 may be configured to function as an antenna radiator. Since a length of the first conductive portion 411 is different from a length of the third conductive portion 413, an operating frequency of an antenna including the first conductive portion 411 and an operating frequency of an antenna including the third conductive portion 413 may be different. In the folded state of the foldable electronic device 300, signals (e.g., radio frequency (RF) signals) radiated through the first conductive portion 411 and/or the third conductive portion 413 may be blocked by the second conductive portion 412 between the first conductive portion 411 and the third conductive portion 413. The second non-conductive portion 422 may be disposed adjacent to or overlapping the first non-conductive portion 421 and/or the third non-conductive portion 423 on which an electric field is formed strongly. The fifth non-conductive portion 425 may be disposed adjacent to or overlapping the fourth non-conductive portion 424 and/or the sixth non-conductive portion 426 in which an electric field is formed strongly. An effect in which the second conductive portion 412 blocks signals radiated from the first conductive portion 411 and/or the third conductive portion 413 may be reduced, through the second non-conductive portion 422 and the fifth non-conductive portion 425 that are contacted with the second conductive portion 412.

Referring to FIG. 4B, the first non-conductive portion 421 and the second non-conductive portion 422 may be disposed such that the second virtual line V2 extending from the first non-conductive portion 421 is parallel to the third virtual line V3 extending from the second non-conductive portion 422. In this case, the first non-conductive portion 421 and the second non-conductive portion 422 may extend in the same direction.

According to an embodiment, in the folded state of the foldable electronic device 300, the first non-conductive portion 421 and the second non-conductive portion 422 may be disposed such that the first virtual line V1 extending in the direction (e.g., the z-axis direction) orthogonal to the rear side of the foldable housing 301 does not match one of the second virtual line V2 and the third virtual line V3. For example, at least one of the first non-conductive portion 421 and the second non-conductive portion 422 may be disposed to have an incline with respect to the first virtual line V1.

Referring to FIG. 4B, the second non-conductive portion 422 and the third non-conductive portion 423 may be disposed such that the third virtual line V3 extending from the second non-conductive portion 422 is parallel to the fifth virtual line V5 extending from the third non-conductive portion 423. In this case, the first non-conductive portion 421, the second non-conductive portion 422, and the third non-conductive portion 423 may extend in the same direction, and the second virtual line V2, the third virtual line V3, and the fifth virtual line V5 may be substantially the same.

According to an embodiment, in the folded state of the foldable electronic device 300, the second non-conductive portion 422 and the third non-conductive portion 423 may be disposed such that the first virtual line V1 extending in a direction (e.g., the z-axis direction) orthogonal to the rear side of the foldable housing 301does not match one of the third virtual line V3 and the fifth virtual line V5. For example, at least one of the second non-conductive portion 422 and the third non-conductive portion 423 may be disposed to have an incline with respect to the first virtual line V1.

Referring to FIG. 4B, the foldable electronic device 300 may further include a fourth non-conductive portion 424, a fifth non-conductive portion 425, and a sixth non-conductive portion 426.

According to an embodiment, the fourth non-conductive portion 424 and the fifth non-conductive portion 425 may be disposed such that the seventh virtual line V7 extending from the fourth non-conductive portion 424 is parallel to the eighth virtual line V8 extending from the fifth non-conductive portion 425. In this case, the fourth non-conductive portion 42 and the fifth non-conductive portion 425 may extend in the same direction.

According to an embodiment, in the folded state of the foldable electronic device 300, the fourth non-conductive portion 424 and the fifth non-conductive portion 425 may be disposed such that the sixth virtual line V6 extending in the direction (e.g., the z-axis direction) orthogonal to the rear side of the foldable housing 301 does not match one of the seventh virtual line V7 and the eighth virtual line V8. For example, at least one of the fourth non-conductive portion 424 and the fifth non-conductive portion 425 may be disposed to have an incline with respect to the sixth virtual line V6.

Referring to FIG. 4B, the fifth non-conductive portion 425 and the sixth non-conductive portion 426 may be disposed such that the eighth virtual line V8 extending from the fifth non-conductive portion 425 is parallel to the ninth virtual line V9 extending from the sixth non-conductive portion 426. In this case, the fourth non-conductive portion 424, the fifth non-conductive portion 425, and the sixth non-conductive portion 426 may extend in the same direction, and the seventh virtual line V7, the eighth virtual line V8, and the ninth virtual line V9 may be substantially the same.

According to an embodiment, in the folded state of the foldable electronic device 300, the fifth non-conductive portion 425 and the sixth non-conductive portion 426 may be disposed such that the sixth virtual line V6 extending in the direction (e.g., the z-axis direction) orthogonal to the rear side of the foldable housing 301 does not match one of the eighth virtual line V8 and the ninth virtual line V9. For example, at least one of the fifth non-conductive portion 425 and the sixth non-conductive portion 426 may be disposed to have an incline with respect to the sixth virtual line V6.

In the embodiment illustrated in FIG. 4B, the first non-conductive portion 421, the second non-conductive portion 422, and the third non-conductive portion 423 may be inclined with respect to the first virtual line V1, and may be parallel to each other. In an embodiment, the fourth non-conductive portion 424, the fifth non-conductive portion 425, and the sixth non-conductive portion 426 may be inclined with respect to the sixth virtual line V6, and may be parallel to each other.

In FIG. 4B, it is described that the first non-conductive portion 421, the second non-conductive portion 422, and the third non-conductive portion 423 extend in parallel, and the fourth non-conductive portion 424, the fifth non-conductive portion 425, and the sixth non-conductive portion 426 extend in parallel, but it is not limited thereto.

Referring to FIG. 4C, the first non-conductive portion 421 and the second non-conductive portion 422 may extend in parallel, and the third non-conductive portion 423 may extend so as not to be parallel to the first non-conductive portion 421 and the second non-conductive portion 422. The fourth non-conductive portion 424 and the fifth non-conductive portion 425 may extend in parallel, and the sixth non-conductive portion 426 may extend so as not to be parallel to the fourth non-conductive portion 424 and the fifth non-conductive portion 425.

Referring to FIG. 4C, the first non-conductive portion 421, the second non-conductive portion 422, and the third non-conductive portion 423 may be extended so as to be inclined to the first virtual line V1. A direction in which the first non-conductive portion 421 and the second non-conductive portion 422 extend and a direction in which the third non-conductive portion 423 extends may be different from each other. For example, the second virtual line V2 extending from the first non-conductive portion 421 may be parallel to the third virtual line V3 extending from the second non-conductive portion 422, and may form an incline with the fifth virtual line V5 extending from the third non-conductive portion 423.

According to an embodiment, the fourth non-conductive portion 424, the fifth non-conductive portion 425, and the sixth non-conductive portion 426 may be extended so as to be inclined to the sixth virtual line V6. A directions in which the fourth non-conductive portion 424 and the fifth non-conductive portion 425 extend and a direction in which the sixth non-conductive portion 426 extends may be different from each other. For example, the seventh virtual line V7 extending from the fourth non-conductive portion 424 may be parallel to the eighth virtual line V8 extending from the fifth non-conductive portion 425, and may form an incline with the ninth virtual line V9 extending from the sixth non-conductive portion 426.

Referring to FIG. 4D, in the folded state of the foldable electronic device 300, one of the first non-conductive portion 421 and the second non-conductive portion 422 may extend parallel to the first virtual line V1 extending in a direction (e.g., the z-axis direction) orthogonal to the rear side of the foldable housing 301, and another may extend so as to be inclined to the first virtual line V1. For example, the first non-conductive portion 421 may extend so as to be inclined to the first virtual line V1, and the second non-conductive portion 422 may extend parallel to the first virtual line V1. The second virtual line V2 extending from the first non-conductive portion 421 may be inclined to the first virtual line V1, and the third virtual line V3 extending from the second non-conductive portion 422 may be parallel to the first virtual line V1.

According to an embodiment, in the folded state of the foldable electronic device 300, one of the second non-conductive portion 422 and the third non-conductive portion 423 may extend parallel to the first virtual line V1 extending in a direction (e.g., the z-axis direction) orthogonal to the rear side of the foldable housing 301, and another may extend so as to be inclined to the first virtual line V1. For example, the third non-conductive portion 423 may extend so as to be inclined to the first virtual line V1, and the second non-conductive portion 422 may extend parallel to the first virtual line V1. The first virtual line V1 may form an incline with the fifth virtual line V5 extending from the third non-conductive portion 423.

Referring to FIG. 4D, the foldable electronic device 300 may further include the fourth non-conductive portion 424, the fifth non-conductive portion 425, and the sixth non-conductive portion 426.

Referring to FIG. 4D, in the folded state of the foldable electronic device 300, one of the fourth non-conductive portion 424 and the fifth non-conductive portion 425 may extend parallel to the sixth virtual line V6 extending in a direction (e.g., the z-axis direction) orthogonal to the rear side of the foldable housing 301, and another may extend so as to be inclined to the sixth virtual line V6. For example, the fourth non-conductive portion 424 may extend so as to be inclined to the sixth virtual line V6, and the fifth non-conductive portion 425 may extend parallel to the sixth virtual line V6. The seventh virtual line V7 extending from the fourth non-conductive portion 424 may be inclined to the sixth virtual line V6, and the eighth virtual line V8 extending from the fifth non-conductive portion 422 may be parallel to the sixth virtual line V6.

According to an embodiment, in the folded state of the foldable electronic device 300, one of the fifth non-conductive portion 425 and the sixth non-conductive portion 426 may extend parallel to the sixth virtual line V6 extending in the direction (e.g., the z-axis direction) orthogonal to the rear side of the foldable housing 301, and another may extend so as to be inclined to the sixth virtual line V6. For example, the sixth non-conductive portion 426 may extend so as to be inclined to the sixth virtual line V6, and the fifth non-conductive portion 425 may extend parallel to the sixth virtual line V6. The sixth virtual line V6 may form an incline with the ninth virtual line V9 extending from the sixth non-conductive portion 426.

The examples illustrated in FIGS. 4A, 4B, 4C, and 4D are structures satisfying the structure described with reference to FIGS. 3C and 3D, and are structures capable of reducing interference by the second conductive portion 412 when the first conductive portion 411 and/or the third conductive portion 413 operates as an antenna radiator.

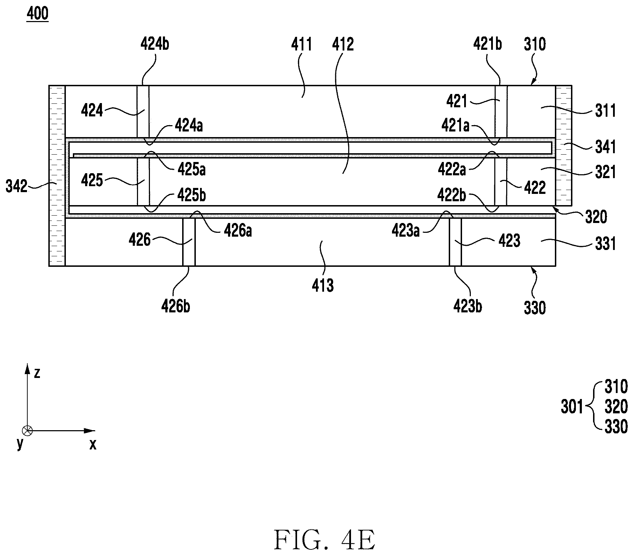

FIG. 4E illustrates a foldable electronic device according to a comparative example.

Referring to FIG. 4E, an example of a foldable electronic device 400 according to a comparative example that does not satisfy the structure will be described.

In a case of an example illustrated in FIG. 4E, in a folded state of the foldable electronic device 300, a first end 421a of a first non-conductive portion 421 and a first end 422a of a second non-conductive portion 422 may be disposed to overlap each other when viewed in a direction (e.g., z-axis direction) orthogonal to a rear side of the foldable housing 301. A second end 422b of the second non-conductive portion 422 and a first end 423a of a third non-conductive portion 423 may be disposed so as not to overlap each other when viewed in the direction (e.g., the z-axis direction) orthogonal to the rear side of the foldable housing 301. For example, in the folded state of the foldable electronic device 300, when viewed in the direction orthogonal to the rear side of the foldable housing 301, a first end 424a of a fourth non-conductive portion 424 and a first end 425a of a fifth non-conductive portion 425 may be disposed to overlap each other, but a second end 425b of the fifth non-conductive portion 425 and a first end 426a of a sixth non-conductive portion 426 may be disposed to not overlap each other. In the folded state of the foldable electronic device 300, when the third conductive portion 413 operates as an antenna radiator, since the example illustrated in FIG. 4E does not satisfy the structures of FIGS. 3C and 3D, the second conductive portion 412 may block radiation of signals and interfere with the signals. In this case, communication performance of the foldable electronic device 400 according to the comparative example may be deteriorated by the second conductive portion 412.

The foldable electronic device 300 according to an embodiment may include a foldable housing 301 of a segmentation structure that satisfy the structure described with reference to FIGS. 3C and 3D, such as the foldable housing 301 illustrated in FIGS. 4A, 4B, 4C, and 4D.

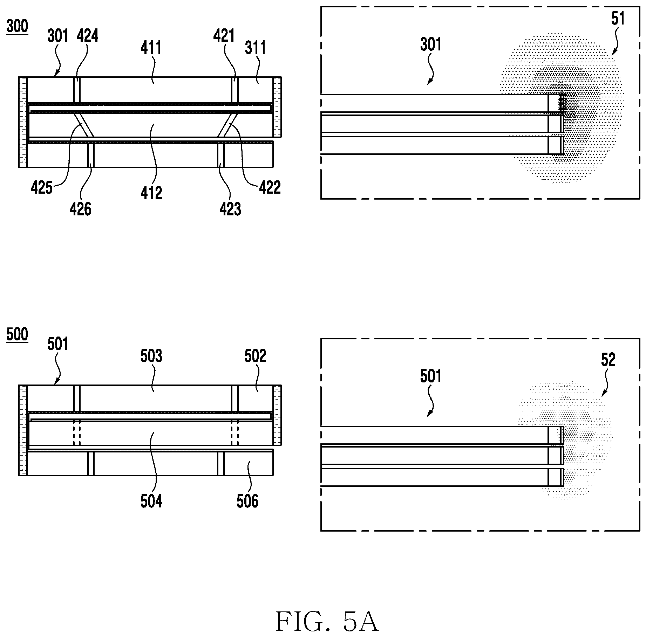

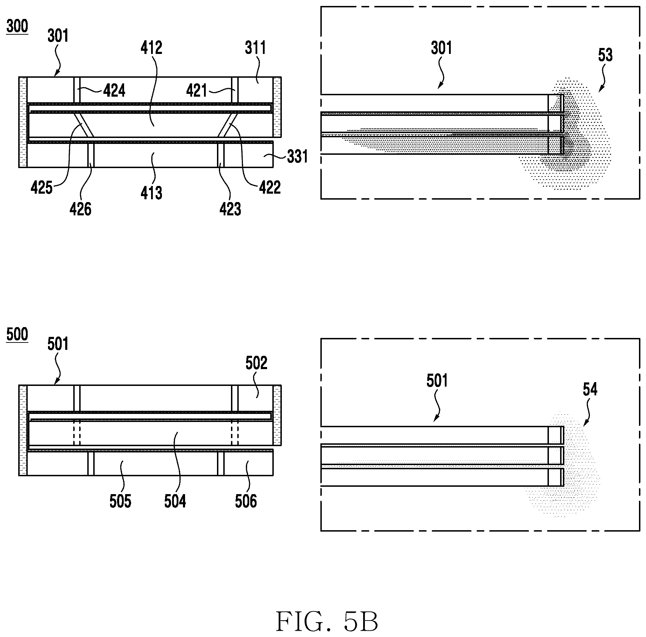

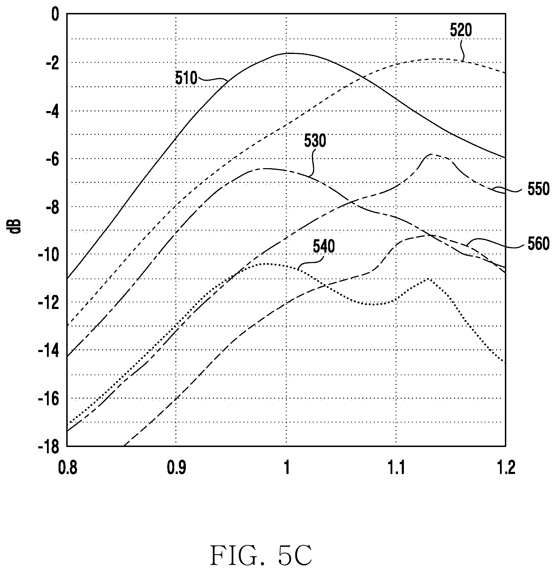

FIG. 5A illustrates electric fields formed from a first antenna of an electronic device according to an embodiment and a first antenna of an electronic device according to a comparative example. FIG. 5B illustrates electric fields formed from a second antenna of an electronic device according to an embodiment and a second antenna of an electronic device according to a comparative example. FIG. 5C is a graph indicating efficiency of the first antenna and efficiency of the second antenna.

Referring to FIG. 5A, a foldable electronic device 300 according to an embodiment may include a foldable housing 301 having a structure described with reference to FIGS. 3C and 3D. At least a portion of a first conductive portion 411 forming at least a portion of a first lateral side 311 may operate as a radiator of a first antenna.

When comparing a housing 501 of a foldable electronic device 500 according to a comparative example with the foldable housing 301 according to an embodiment, the housing 501 may not include a second non-conductive portion 422 and/or a fifth non-conductive portion 425, or both ends of non-conductive portions in a second lateral side 504 may not overlap ends of non-conductive portions in a first lateral side 502 and ends of non-conductive portions in a third lateral side 506. A structure in which both ends of non-conductive portions of the second lateral side 504 do not overlap with each of ends of the non-conductive portions in the first lateral side 502 and ends of the non-conductive portions in the third lateral side 506 may be referred to as a structure in which all of both ends of the non-conductive portions in the second lateral side 504 do not overlap ends of the non-conductive portions in the first lateral side 502 and ends of the non-conductive portions in the third lateral side 506, or overlap any one of the ends of the non-conductive portions in the first lateral side 502 and the ends of the non-conductive portions in the third lateral side 506. At least a portion of a first conductive portion 503 forming at least a portion of the first lateral side 502 may operate as a radiator of a first antenna.

According to an embodiment, wireless communication circuitry (e.g., the wireless communication circuitry 192 of FIG. 2) may feed a first feeding point of the first conductive portion 411 and 503. When a feeding signal is fed to the first feeding point, radiation current may be formed along at least a portion of the first conductive portion 411 and 503. An electric field may be formed in the housing 301 and 501 by the radiation current. The first conductive portion 411 and 503 may be configured to radiate a first signal on a first frequency band, based on feeding by the wireless communication circuitry 192. As the intensity of the electric field formed in the housing 301 and 501 increases, a signal reflected without being radiated through at least a portion of the first conductive portion 411 and 503 may be reduced, thereby improving the efficiency of the first antenna.

Referring to FIG. 5A, a first electric field 51 formed in the foldable housing 301 of the foldable electronic device 300 according to the embodiment may be formed to be stronger than a second electric field 52 formed in the housing 501 of the foldable electronic device 500 according to a comparative example. In a case of the foldable electronic device 500 according to a comparative example, since the third lateral side 506 adjacent to the first conductive portion 503 does not include a non-conductive portion, or both ends of the non-conductive portions of the second lateral side 504 do not overlap with each of ends of the non-conductive portions in the first lateral side 502 and ends of the non-conductive portions in the third lateral side 506, the second electric field 52 weaker than the first electric field 51 may be formed. In a case of the foldable electronic device 300 according to an embodiment, an effect in which the second conductive portion 412 blocks the first conductive portion 411 may be reduced by the first non-conductive portion 421, the second non-conductive portion 422, the fourth non-conductive portion 424, and the fifth non-conductive portion 425. The first electric field 51 may be strongly formed by the first non-conductive portion 421, the second non-conductive portion 422, the fourth non-conductive portion 424, and the fifth non-conductive portion 425. Since the intensity of the first electric field 51 is stronger than that of the second electric field 52, the efficiency of the first antenna of the foldable electronic device 300 according to an embodiment may be higher than the efficiency of the first antenna of the foldable electronic device 500 according to a comparative example.

Referring to FIG. 5B, at least a portion of the third conductive portion 413 forming at least a portion of the third lateral side 331 may operate as a radiator of a second antenna. At least a portion of the second conductive portion 413 forming at least a portion of the third lateral side 331 may operate as a radiator of the second antenna.

According to an embodiment, wireless communication circuitry (e.g., the wireless communication circuitry 192 of FIG. 2) may feed a second feeding point of the third conductive portion 413. When a feeding signal is fed to the second feeding point, radiation current may be formed along at least a portion of the third conductive portion 413. An electric field may be formed in the foldable housing 301 by the radiation current. The third conductive portion 413 may be configured to radiate a second signal on a second frequency band, based on feeding by the wireless communication circuitry 192. As the intensity of the electric field formed in the foldable housing 301 increases, a signal reflected without being radiated through at least a portion of the third conductive portion 413 may be reduced, thereby improving the efficiency of the second antenna.

Referring to FIG. 5B, a third electric field 53 formed in the foldable housing 301 of the foldable electronic device 300 according to an embodiment may be formed to be stronger than a fourth electric field 54 formed in the housing 501 of the foldable electronic device 500 according to a comparative example. In a case of the foldable electronic device 500 according to a comparative example, since the third lateral side 506 adjacent to the third conductive portion 505 does not include a non-conductive portion, or both ends of the non-conductive portions of the second lateral side 504 do not overlap with each of the ends of the non-conductive portions in the first lateral side 502 and the ends of the non-conductive portions in the third lateral side 506, the fourth electric field 54 weaker than the third electric field 53 may be formed. In a case of the foldable electronic device 300 according to an embodiment, an effect of the second conductive portion 412 blocking the third conductive portion 413 may be reduced by the second non-conductive portion 422, the third non-conductive portion 423, the fifth non-conductive portion 425, and the sixth non-conductive portion 426. The third electric field 53 may be strongly formed in the second non-conductive portion 422, the third non-conductive portion 423, the fifth non-conductive portion 425, and the sixth non-conductive portion 426. Since the intensity of the third electric field 53 is stronger than that of the fourth electric field 54, the efficiency of the second antenna of the foldable electronic device 300 according to an embodiment may be higher than that of the second antenna of the foldable electronic device 500 according to a comparative example.

Referring to FIG. 5C, the efficiency of the antenna of the foldable electronic device 300 according to an embodiment may be compared with the efficiency of the antenna according to a comparative example. In a graph of FIG. 5C, the x-axis is frequency (unit: GHz), and the y-axis is antenna efficiency (unit: dB).

A first graph 510 of FIG. 5C illustrates the efficiency of a first antenna in the unfolded state. A second graph 520 of FIG. 5C illustrates the efficiency of a second antenna in the unfolded state. In the unfolded state, since the first conductive portion 411 and the second lateral side 321 do not overlap, performance of the first antenna may be the highest. Since the efficiency of the first antenna of a foldable electronic device (e.g., the foldable electronic device 300 of FIG. 5A) according to an embodiment and the efficiency of the first antenna of an electronic device (e.g., the foldable electronic device 500 according to the comparative example of FIG. 5A) according to a comparative example may be substantially the same, the first graph 510 may be referred to as the efficiency of the first antenna of the foldable electronic device 300 according to an embodiment and the efficiency of the first antenna of the electronic device 500 according to a comparative example. Since the efficiency of the second antenna of the foldable electronic device 300 according to an embodiment and the efficiency of the second antenna of the electronic device 500 according to a comparative example may be substantially the same, the second graph 520 may be referred to as the efficiency of the second antenna of the foldable electronic device 300 according to an embodiment and the efficiency of the second antenna of the electronic device 500 according to a comparative example.

A third graph 530 of FIG. 5C illustrates the efficiency of the first antenna in the folded state of the foldable electronic device 300 according to an embodiment. A fourth graph 540 of FIG. 5C illustrates the efficiency of the first antenna in the folded state of the electronic device 500 according to a comparative example.

Comparing the third graph 530 with the fourth graph 540, in a first frequency band (e.g., about 1 GHz or less), the third graph 530 may have higher efficiency than the fourth graph 540. For example, in a frequency band between about 0.9 GHz and about 1 GHz, the third graph 530 may have an efficiency about 3.5 dB to 4 dB higher than that of the fourth graph 540. Referring to the third graph 530 and the fourth graph 540, the efficiency of the first antenna of the foldable electronic device 300 according to an embodiment may be higher than that of the first antenna of the foldable electronic device 500 according to a comparative example. The foldable electronic device 300 according to an embodiment may provide superior communication performance with respect to a first signal on a first frequency band than the foldable electronic device 500 according to a comparative example.

A fifth graph 550 of FIG. 5C illustrates the efficiency of the second antenna in the folded state of the foldable electronic device 300 according to an embodiment. A sixth graph 560 of FIG. 5C illustrates the efficiency of the second antenna in the folded state of the foldable electronic device 500 according to a comparative example.

Comparing the fifth graph 550 with the sixth graph 560, in a second frequency band (e.g., about 1.1 GHz or more), the fifth graph 550 may have higher efficiency than the sixth graph 560. For example, in a frequency band between about 1.1 GHz and about 1.2 GHz, the fifth graph 550 may have an efficiency about 3 dB to 3.5 dB higher than that of the sixth graph 560. Referring to the fifth graph 550 and the sixth graph 560, the efficiency of the second antenna of the foldable electronic device 300 according to an embodiment may be higher than that of the second antenna of the electronic device 500 according to a comparative example. The foldable electronic device 300 according to an embodiment may provide superior communication performance with respect to a second signal on a second frequency band than the electronic device 500 according to a comparative example.

As described above, according to an embodiment, in the folded state, the foldable electronic device 300 may provide relatively superior communication performance, through the third non-conductive portion 423 included in the second lateral side 321, by reducing an effect of the second lateral side 321 blocking the radiation of signals, and interference with the signals, and providing a path through which the signals may be radiated. The first antenna may use at least a portion of the first conductive portion 411 as an antenna radiator. The second antenna may use at least a portion of the third conductive portion 413 as an antenna radiator. In the folded state of the foldable electronic device 300, in order to increase the efficiency of the first antenna and the efficiency of the second antenna, the foldable electronic device 300 according to an embodiment may include the second non-conductive portion 422 adjacent to each of the first non-conductive portion 421 and the third non-conductive portion 423, and the fifth non-conductive portion 425 adjacent to each of the fourth non-conductive portion 424 and the sixth non-conductive portion 426. As described above, a first end (e.g., the first end 422a of FIG. 3C) of the second non-conductive portion 422may overlap a first end (e.g., the first end 421a of FIG. 3C) of the first non-conductive portion 421, and a second end (e.g., the second end 422b of FIG. 3C) of the second non-conductive portion 422 may overlap a first end (e.g., the first end 423a of FIG. 3C) of the third non-conductive portion 423. A first end (e.g., the first end 425a of FIG. 3D) of the fifth non-conductive portion 425 may overlap a first end (e.g., the first end 424a of FIG. 3D) of the fourth non-conductive portion 424, and a second end (e.g., the second end 425b of FIG. 3D) of the fifth non-conductive portion 425 may overlap a first end (e.g., the first end 426a of FIG. 3D) of the sixth non-conductive portion 426. Since the second non-conductive portion 422 and the fifth non-conductive portion 425 help to form a strong electric field, the efficiency of the first antenna and the efficiency of the second antenna may be increased.

Hereinafter, various embodiments of the foldable housing 301 of the foldable electronic device 300 according to an embodiment are described. As described above, the foldable housing 301 of the foldable electronic device 300 according to an embodiment may have the structure described with reference to FIGS. 3C and 3D.

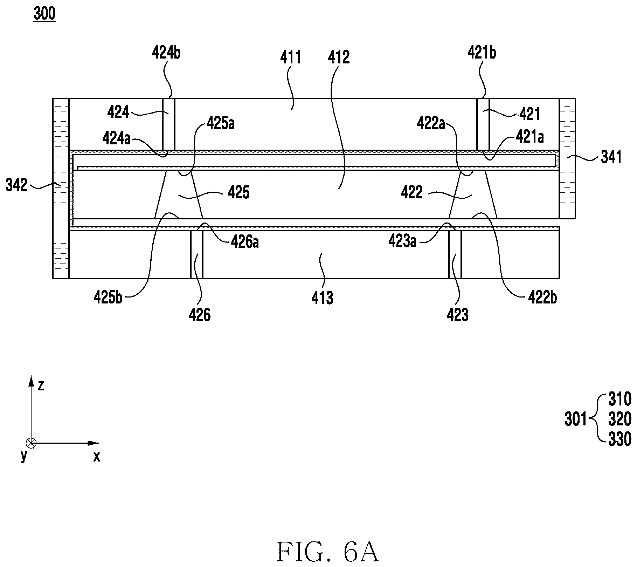

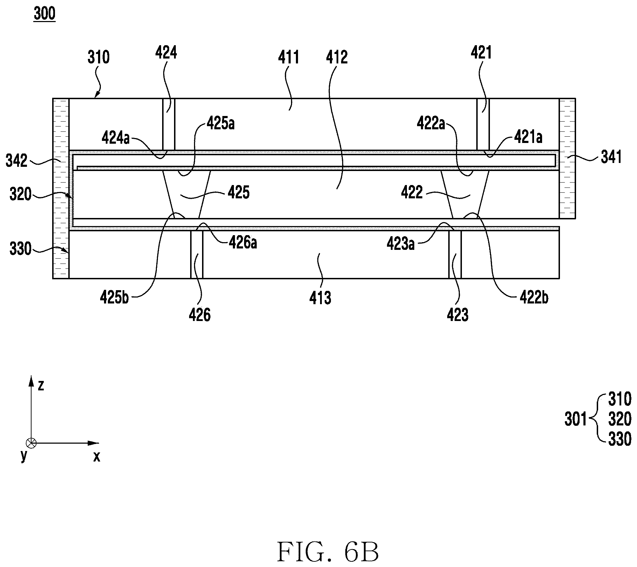

FIGS. 6A and 6B illustrate a foldable electronic device according to an embodiment including non-conductive portions having different widths.

Referring to FIG. 6A, a first width of a first non-conductive portion 421 may be narrower than a second width of a second non-conductive portion 422. A third width of a third non-conductive portion 423 may be narrower than the second width of the second non-conductive portion 422. According to an embodiment, in a folded state of a foldable electronic device 300, the second non-conductive portion 422 may have a relatively wide width such that a first end 422a of the second non-conductive portion 422 overlaps a first end 421a of the first non-conductive portion 421, and a second end 422b of the second non-conductive portion 422 overlaps a first end 423a of the third non-conductive portion 423.

According to an embodiment, a width of the second non-conductive portion 422 may not be constant. For example, the first end 422a of the second non-conductive portion 422 overlapping with the first end 421a of the first non-conductive portion 421 may be narrower than the second end 422b of the second non-conductive portion 422 overlapping with the first end 423a of the third non-conductive portion 423. However, it is not limited thereto. Referring to FIG. 6B, the first end 422a of the second non-conductive portion 422 overlapping with the first end 421a of the first non-conductive portion 421 may be wider than the second end 422b of the second non-conductive portion 422 overlapping with the first end 423a of the third non-conductive portion 423.

Referring back to FIG. 6A, the foldable electronic device 300 according to an embodiment may further include a fourth non-conductive portion 424, a fifth non-conductive portion 425, and a sixth non-conductive portion 426.

Referring to FIG. 6A, a fourth width of the fourth non-conductive portion 424 may be narrower than a fifth width of the fifth non-conductive portion 425. A sixth width of the sixth non-conductive portion 426 may be narrower than the fifth width of the fifth non-conductive portion 425. According to an embodiment, in the folded state of the foldable electronic device 300, the fifth non-conductive portion 425 may have a relatively wide width such that a first end 425a of the fifth non-conductive portion 425 overlaps a first end 424a of the fourth non-conductive portion 424, and a second end 425b of the fifth non-conductive portion 425 overlaps a first end 426a of the sixth non-conductive portion 426.

According to an embodiment, a width of the fifth non-conductive portion 425 may not be constant. For example, the first end 425a of the fifth non-conductive portion 425 overlapping with the first end 424a of the fourth non-conductive portion 424 may be narrower than the second end 425b of the fifth non-conductive portion 425 overlapping with the first end 426a of the sixth non-conductive portion 426. However, it is not limited thereto. Referring to FIG. 6B, the first end 425a of the fifth non-conductive portion 425 overlapping with the first end 424a of the fourth non-conductive portion 424 may be wider than the second end 425b of the fifth non-conductive portion 425 overlapping with the first end 426a of the sixth non-conductive portion 426.

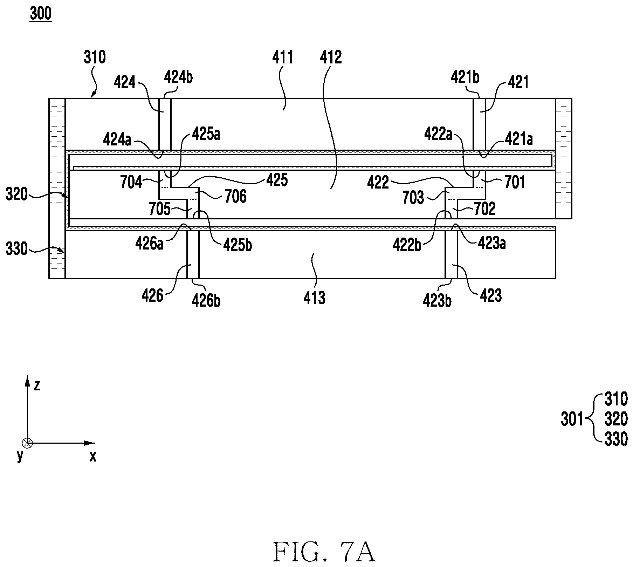

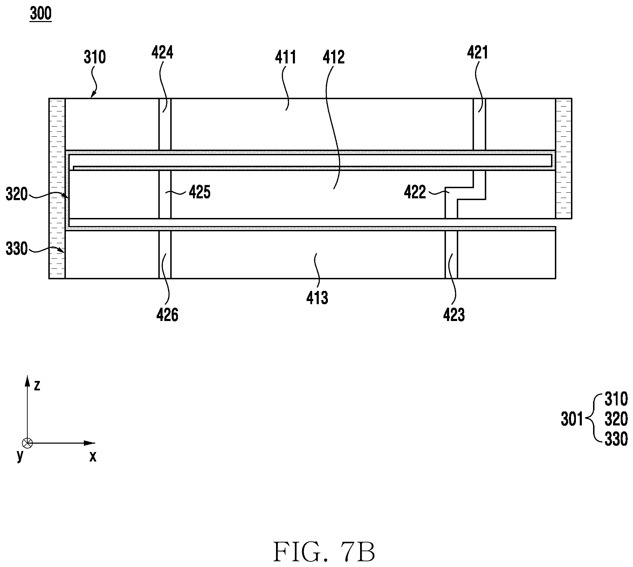

FIGS. 7A and 7B illustrate a foldable electronic device according to an embodiment including portions having different extension directions.

Referring to FIG. 7A, in a folded state of a foldable electronic device 300, a second non-conductive portion 422 may include portions having different extension directions such that a first end 422a of the second non-conductive portion 422 overlaps a first end 421a of a first non-conductive portion 421, and a second end 422b of the second non-conductive portion 422 overlaps a first end 423a of a third non-conductive portion 423.

According to an embodiment, the second non-conductive portion 422 may include a plurality of portions having different extension directions between the first end 422a and the second end 422b.

According to an embodiment, the second non-conductive portion 422 may include a first portion 701, a second portion 702, and a third portion 703. The first portion 701 may be a portion extending straightly in the -z direction from the first end 422a of the second non-conductive portion 422. The second portion 702 may be a portion extending straightly in the +z direction from the second end 422b of the second non-conductive portion 422. The first portion 701 and the second portion 702 may not be on the same line and may be misaligned with each other. The third portion 703 may be a portion extending to connect an end of the first portion 701 and an end of the second portion 702. For example, an extension direction of the third portion 703 may be a direction (e.g., the x-axis direction) orthogonal to an extension direction of the first portion 701 and an extension direction of the second portion 702. However, it is not limited thereto. According to an embodiment, the second non-conductive portion 422 may include a plurality of portions having different extension directions, thereby satisfying the structure described with reference to FIGS. 3B and 3C. In the folded state of the foldable electronic device 300, when viewed in a direction (e.g., the +y direction) orthogonal to the rear side of the foldable housing 301, the first end 421a of the first non-conductive portion 421 and the first end 422a of the second non-conductive portion 422 may overlap each other, and the second end 422b of the second non-conductive portion 422 and the first end 423a of the third non-conductive portion 423 may overlap each other. In an embodiment, in the folded state of the foldable electronic device 300, when viewed in a direction (e.g., the +y direction) orthogonal to the rear side of the foldable housing 301, the second end 421b of the first non-conductive portion 421 and the second end 422b of the second non-conductive portion 422 may not overlap each other, and the second end 422b of the second non-conductive portion 422 and the second end 423b of the third non-conductive portion 423 may not overlap each other.

The foldable electronic device 300 according to an embodiment may further include a fourth non-conductive portion 424, a fifth non-conductive portion 425, and a sixth non-conductive portion 426. The fourth non-conductive portion 424, the fifth non-conductive portion 425, and the sixth non-conductive portion 426 may be symmetrical to each of the first non-conductive portion 421, the second non-conductive portion 422, and the third non-conductive portion 423.

According to an embodiment, the fifth non-conductive portion 425 may include a fourth portion 704, a fifth portion 705, and a sixth portion 706. The fourth portion 704 may be a portion extending straightly in the -z direction from the first end 422a of the second non-conductive portion 422. The fifth portion 705 may be a portion extending straightly in the +z direction from the second end 422b of the second non-conductive portion 422. The fourth portion 704 and the fifth portion 705 may not be on the same line and may be misaligned with each other. The sixth portion 706 may be a portion extending to connect an end of the fourth portion 704 and an end of the fifth portion 705. For example, an extension direction of the sixth portion 706 may be a direction (e.g., the x-axis direction) orthogonal to an extension direction of the fourth portion 704 and an extension direction of the fifth portion 705. However, it is not limited thereto. According to an embodiment, the fifth non-conductive portion 425 may include a plurality of portions having different extension directions, thereby satisfying the structure described with reference to FIGS. 3B and 3C. In the folded state of the foldable electronic device 300, when viewed in a direction (e.g., the +y direction) orthogonal to the rear side of the foldable housing 301, a first end 424a of the fourth non-conductive portion 424 and a first end 425a of the fifth non-conductive portion 425 may overlap each other, and s second end 425b of the fifth non-conductive portion 425 and a first end 426a of the sixth non-conductive portion 426 may overlap each other. In an embodiment, in the folded state of the foldable electronic device 300, when viewed in a direction (e.g., the +y direction) orthogonal to the rear side of the foldable housing 301, the second end 424a of the fourth non-conductive portion 424 and the second end 425b of the fifth non-conductive portion 425 may not overlap each other, and the second end 425b of the fifth non-conductive portion 425 and a second end 426b of the sixth non-conductive portion 426 may not overlap each other.

Referring to FIG. 7B, an example of a structure in which the fourth non-conductive portion 424, the fifth non-conductive portion 425, and the sixth non-conductive portion 426 are not symmetrical with the first non-conductive portion 421, the second non-conductive portion 422, and the third non-conductive portion 423 is illustrated.

Referring to FIG. 7B, the first non-conductive portion 421, the second non-conductive portion 422, and the third non-conductive portion 423 may have the structure illustrated in FIG. 7A. When viewed in a direction (e.g., the +y direction) orthogonal to the rear side of the foldable housing 301, the fourth non-conductive portion 424, the fifth non-conductive portion 425, and the sixth non-conductive portion 426 may overlap as a whole.

Referring to FIG. 7B, even when the fourth non-conductive portion 424, the fifth non-conductive portion 425, and the sixth non-conductive portion 426 are not symmetrical with the first non-conductive portion 421, the second non-conductive portion 422, and the third non-conductive portion 423, a segmentation structure for improving the communication performance of the foldable electronic device 300 may be satisfied. For example, in the embodiment illustrated in FIG. 7B, in the folded state of the foldable electronic device 300, even when the fourth non-conductive portion 424, the fifth non-conductive portion 425, and the sixth non-conductive portion 426 overlap as a whole, since the first non-conductive portion 421, the second non-conductive portion 422, and the third non-conductive portion 423 satisfy the structure described in FIGS. 3B and 3C, the foldable electronic device 300 may have the effect of improving the communication performance described with reference to FIGS. 3A and 3B.

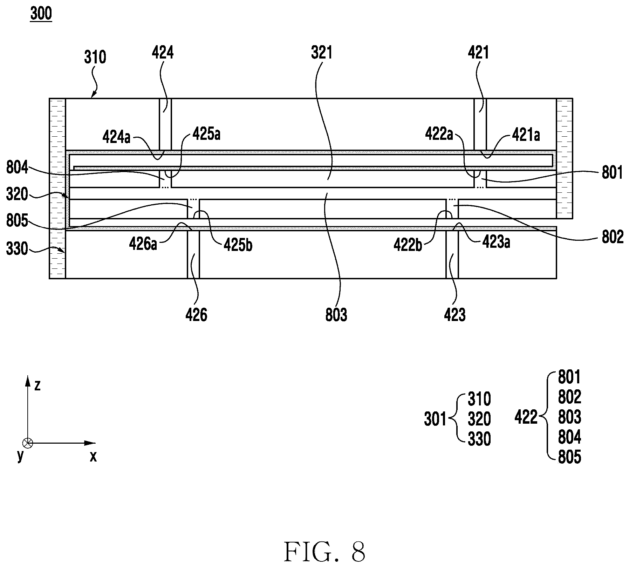

FIG. 8 illustrates an example of a second non-conductive portion including portions having different extension directions.

Referring to FIG. 8, a second non-conductive portion 422 may include portions having different extension directions. In the structure described above with reference to FIG. 7A, a second non-conductive portion 422 having a structure illustrated in FIG. 8 may be formed by being connected a third portion (e.g., the third portion 703 of FIG. 7A) and a sixth portion (e.g., the sixth portion 706 of FIG. 7A). According to an embodiment, the second non-conductive portion 422 may include a first portion 801, a second portion 802, a third portion 803, a fourth portion 804, and a fifth portion 805.

According to an embodiment, the first portion 801 may be a portion extending in the -z direction from a first end 422a of the second non-conductive portion 422 overlapping with a first end 421a of a first non-conductive portion 421. The second portion 802 may be a portion misaligned with the first portion 801 and extending in the +z direction from a second end 422b of the second non-conductive portion 422. The third portion 803 may traverse a second lateral side 321 in a longitudinal direction (e.g., the x-axis direction) of the second lateral side 321. The fourth portion 804 may be a portion extending in the -z direction from a first end 425a of a fifth non-conductive portion 425 overlapping with a first end 424a of a fourth non-conductive portion 424. The fifth portion 805 may be a portion that is misaligned with the fourth portion 804 and extends in the +z direction from a second end 425b of the fifth non-conductive portion 425. The third portion 803 may be a portion formed along a longitudinal direction (e.g., the x-axis direction) of the second lateral side 321 and connected to an end of the first portion 801, an end of the second portion 802, an end of the fourth portion 804, and an end of the fifth portion 805. For example, the third portion 803 may extend from an end of the second lateral side 321 to another end of the second lateral side 321.

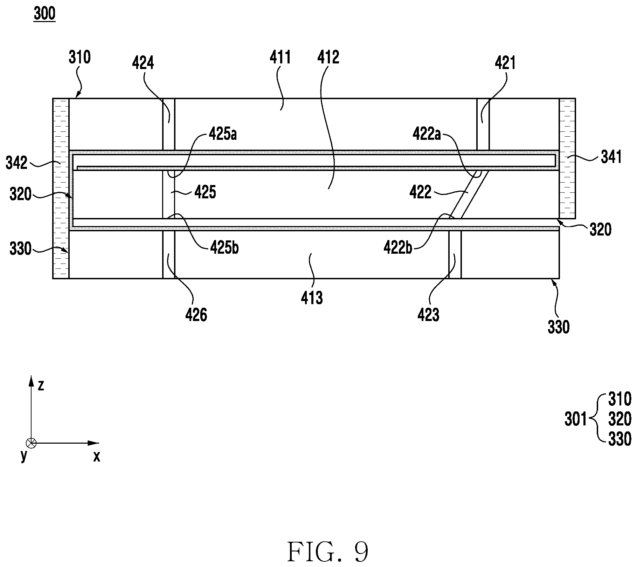

FIG. 9 illustrates a foldable electronic device according to an embodiment.

Referring to FIG. 9, a shape of a second non-conductive portion 422 may be different from a shape of a fifth non-conductive portion 425. According to an embodiment, in a folded state of a foldable electronic device 300, the fifth non-conductive portion 425 may extend parallel to a direction (e.g., -z direction) from a first housing part 310 toward a third housing part 330. The second non-conductive portion 422 may extend to have an inclination with respect to the direction.

According to an embodiment, a fourth non-conductive portion 424 and a sixth non-conductive portion 426 may extend parallel to the direction. In the folded state of the foldable electronic device 300, when viewed in a direction orthogonal to a rear side of the foldable housing 301, the fourth non-conductive portion 424, the fifth non-conductive portion 425, and the sixth non-conductive portion 426 may overlap as a whole.

According to an embodiment, even when the fourth non-conductive portion 424, the fifth non-conductive portion 425, and the sixth non-conductive portion 426 do not satisfy the structure illustrated in FIGS. 3B and 3C, in case that the first non-conductive portion 421, the second non-conductive portion 422, and the third non-conductive portion 423 satisfy the structure, a segmentation structure for improving the communication performance of the foldable electronic device 300 may be satisfied. As illustrated in FIG. 9, in the folded state of the foldable electronic device 300, even though the fourth non-conductive portion 424, the fifth non-conductive portion 425, and the sixth non-conductive portion 426 overlap each other as a whole, since the first non-conductive portion 421, the second non-conductive portion 422, and the third non-conductive portion 423 satisfy the structure described in FIG. 3B and FIG. 3C, the foldable electronic device 300 may have the effect of improving the communication performance described with reference to FIG. 3A and FIG. 3B.

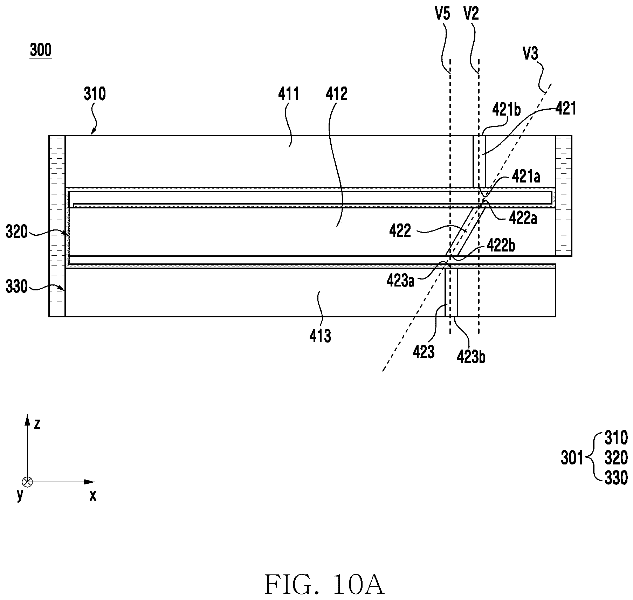

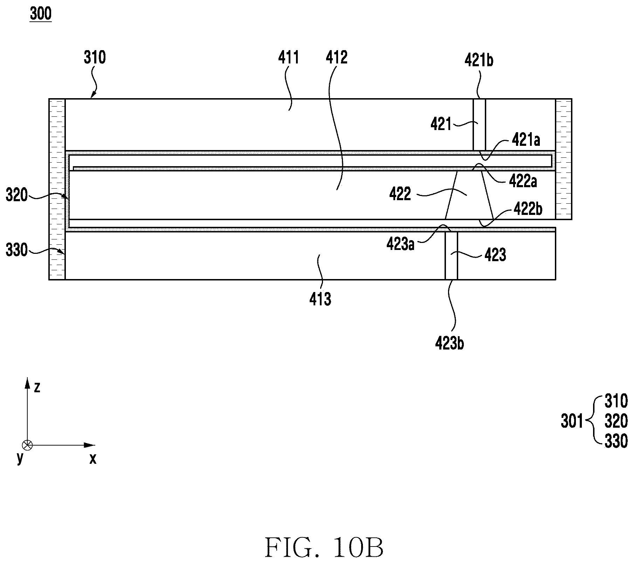

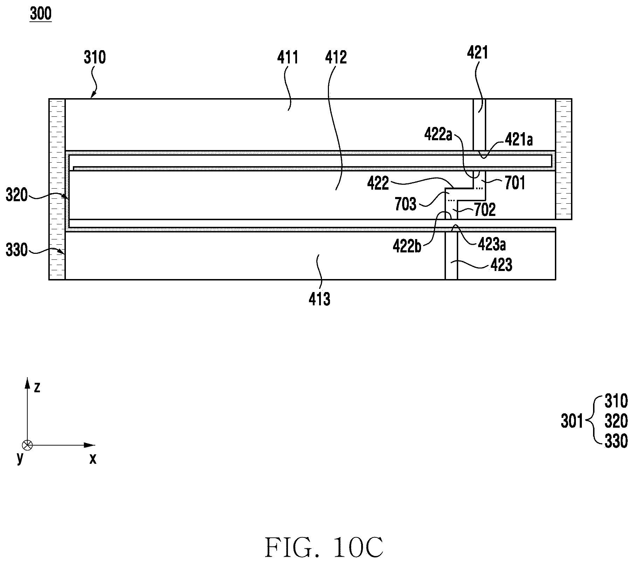

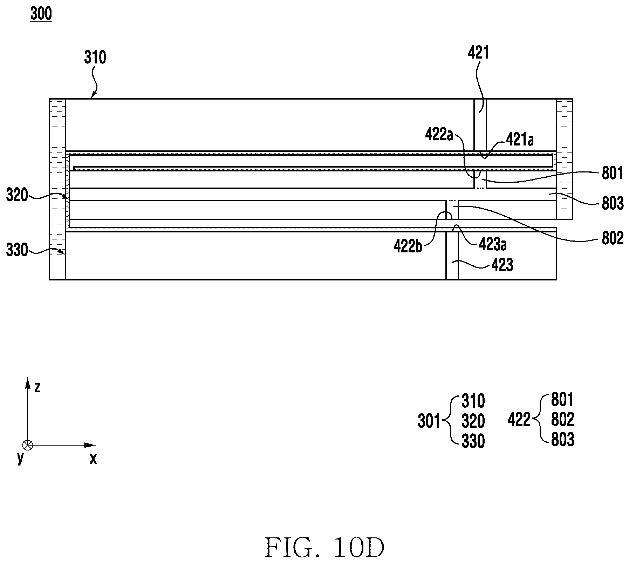

FIGS. 10A, 10B, 10C, and 10D illustrate examples of a foldable housing that includes only one non-conductive portion in each of lateral sides.

According to an embodiment, a foldable electronic device 300 may include a first non-conductive portion 421, a second non-conductive portion 422, and a third non-conductive portion 433. For example, as illustrated in FIGS. 10A, 10B, 10C, and 10D, a fourth non-conductive portion 424, a fifth non-conductive portion 425, and a sixth non-conductive portion 426 may be omitted. Although not shown, the foldable electronic device 300 may also include only a fourth non-conductive portion (e.g., the fourth non-conductive portion 424 of FIG. 3D), a fifth non-conductive portion (e.g., the fifth non-conductive portion 425 of FIG. 3D), and a sixth non-conductive portion (e.g., the sixth non-conductive portion 426 of FIG. 3D).

According to an embodiment, the structure described with reference to FIGS. 3B and 3C may be substantially equally applied even when including only the first non-conductive portion 421, the second non-conductive portion 422, and the third non-conductive portion 423 (or the fourth non-conductive portion 424, the fifth non-conductive portion 425, and the sixth non-conductive portion 426).

Referring to FIG. 10A, in the folded state of the foldable electronic device 300, a first end 421a of the first non-conductive portion 421 and a first end 422a of the second non-conductive portion 422 may be disposed to overlap each other when viewed in a direction (e.g., +y direction) orthogonal to a rear side of the foldable housing 301. In the folded state of the foldable electronic device 300, a second end 422b of the second non-conductive portion 422 and a first end 423a of a third non-conductive portion 423 may be disposed to overlap each other when viewed in a direction (e.g., the +y direction) orthogonal to the rear side of the foldable housing 301. In the embodiment illustrated in FIG. 10A, in the folded state of the foldable electronic device 300, the first non-conductive portion 421 and the second non-conductive portion 422 may be disposed such that a second virtual line V2 extending from the first non-conductive portion 421 is different from the third virtual line V3 extending from the second non-conductive portion 422. For example, the third virtual line V3 may be inclined with respect to the second virtual line V2. In the folded state of the foldable electronic device 300, the second non-conductive portion 422 and the third non-conductive portion 423 may be disposed such that the third virtual line V3 extending from the second non-conductive portion 422 is different from a fifth virtual line V5 extending from the third non-conductive portion 423. For example, the third virtual line V3 may be inclined with respect to the fifth virtual line V5.

Referring to FIG. 10B, a second width of the second non-conductive portion 422 may be wider than a first width of the first non-conductive portion 421 and a third width of the third non-conductive portion 423. In the folded state of the foldable electronic device 300, when viewed in a direction (e.g., the +y direction) orthogonal to the rear side of the foldable housing 301, a width of the first end 422a of the second non-conductive portion 422 may be formed such that the first end 422a of the second non-conductive portion 422 overlaps the first end 421a of the first non-conductive portion 421. In the folded state of the foldable electronic device 300, when viewed in a direction (e.g., the +y direction) orthogonal to the rear side of the foldable housing 301, a width of the second end 422b of the second non-conductive portion 422 may be formed such that the second end 422b of the second non-conductive portion 422 overlaps the first end 423a of the third non-conductive portion 423.

Referring to FIG. 10C, the second non-conductive portion 422 may include portions having different extension directions. For example, the second non-conductive portion 452 may include a first portion 701, a second portion 702, and a third portion 703. The first portion 701 may be a portion extending in the -z direction from the first end 422a of the second non-conductive portion 422. The second portion 702 may be a portion extending in the +z direction from the second end 422b of the second non-conductive portion 422. The first portion 701 and the second portion 702 may not be disposed on the same line and may be misaligned with each other. The third portion 703 may be a portion extending to connect an end of the first portion 701 and an end of the second portion 702. For example, an extension direction of the third portion 703 may be a direction (e.g., the x-axis direction) orthogonal to an extension direction of the first portion 701 and an extension direction of the second portion 702.

Referring to FIG. 10D, the second non-conductive portion 422 may include portions having different extension directions. For example, the second non-conductive portion 422 may include a first portion 801, a second portion 802, and a third portion 803. According to an embodiment, the first portion 801 may be a portion extending in the -z direction from a first end 422a of the second non-conductive portion 422 overlapping with the first end 421a of the first non-conductive portion 421. The second portion 802 may be a portion that is misaligned with the first portion 801 and extends in the +z direction from the second end 422b of the second non-conductive portion 422. The third portion 803 may traverse the second lateral side 321 in a longitudinal direction (e.g., the x-axis direction) of the second lateral side 321.

In addition to the embodiments described with reference to FIGS. 10A, 10B, 10C, and 10D, various embodiments may be possible.

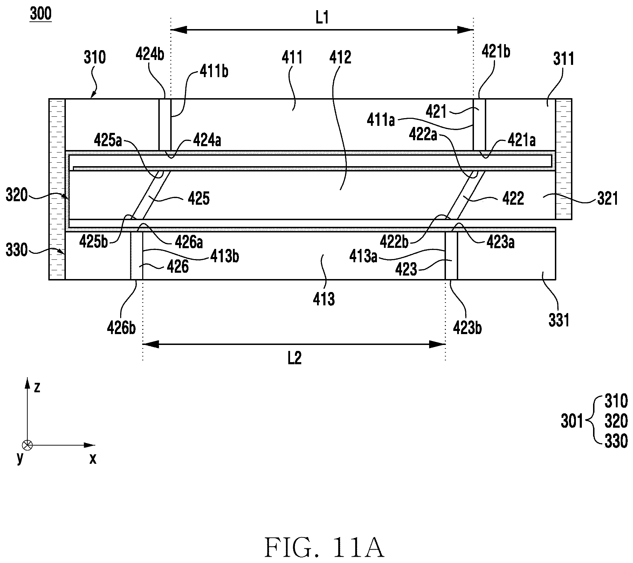

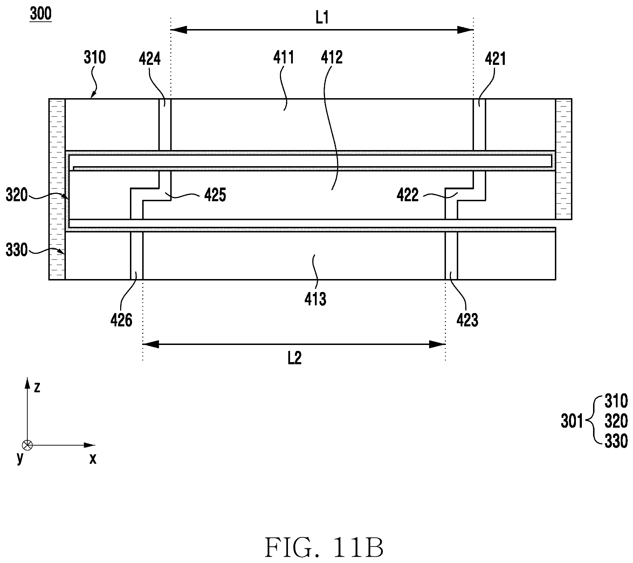

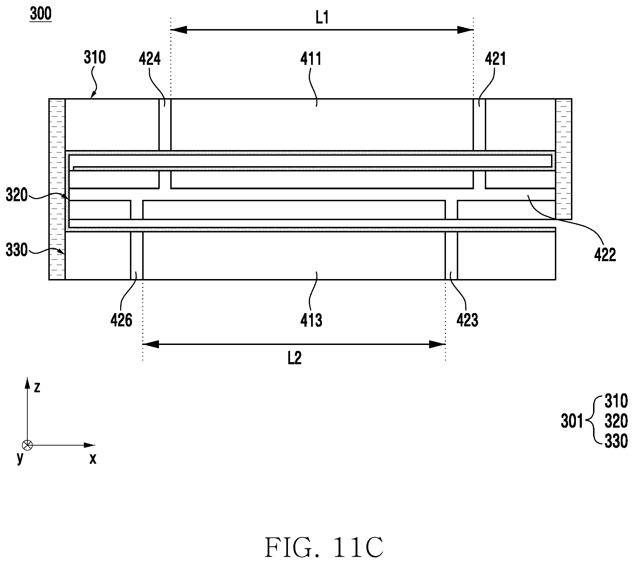

FIGS. 11A, 11B, and 11C illustrate examples of a foldable housing having a structure in which a first length corresponds to a second length.

According to an embodiment, a first length L1 of a first conductive portion 411 forming at least a portion of a first antenna (e.g., the first antenna 210 of FIG. 2) may correspond to a second length L2 of a third conductive portion 413 forming at least a portion of a second antenna (e.g., the second antenna 220 of FIG. 2). For example, the first length L1 may be substantially the same as the second length L2. For example, when a difference between a first frequency band and a second frequency band is small, the first length L1 and the second length L2 may be substantially the same. Alternatively, the first frequency band and the second frequency band may be the same. For example, a foldable electronic device 300 may provide reception diversity by using the first antenna and the second antenna. For example, the first antenna may operate as a primary antenna, and the second antenna may operate as a diversity antenna. However, the description is merely exemplary and is not limited thereto.

According to an embodiment, the first conductive portion 411 may be disposed between a first non-conductive portion 421 and a fourth non-conductive portion 424. The first non-conductive portion 421 may be contacted with an end 411a of the first conductive portion 411, and the fourth non-conductive portion 424 may be contacted with another end 411b of the first conductive portion 411. The first length L1 of the first conductive portion 411 may correspond to a distance between the first non-conductive portion 421 and the fourth non-conductive portion 424. The third conductive portion 413 may be disposed between a third non-conductive portion 423 and a sixth non-conductive portion 426. The third non-conductive portion 423 may be contacted with an end 413a of the third conductive portion 413, and the sixth non-conductive portion 426 may be contacted with another end 413b of the third conductive portion 413. The second length L2 of the third conductive portion 413 may correspond to a distance between the third non-conductive portion 423 and the sixth non-conductive portion 426.

According to an embodiment, even when the first length L1 corresponds to the second length L2, the foldable housing 301 may satisfy the structure described with reference to FIGS. 3B and 3C. For example, even when the first length L1 and the second length L2 are the same, in the folded state of the foldable electronic device 300, the first end 421a of the first non-conductive portion 421 facing a second housing part 320 and the first end 422a of the second non-conductive portion 422 facing a first housing part 310 may be disposed to overlap each other when viewed in a direction (e.g., +y direction) orthogonal to a rear side of the foldable housing 301. For example, even when the first length L1 and the second length L2 are the same, in the folded state of the foldable electronic device 300, the second end 421b of the first non-conductive portion 421 and the second end 422b of the second non-conductive portion 422 may be disposed so as not to overlap each other when viewed in the direction orthogonal to the rear side of the foldable housing 301. Even when the first length L1 and the second length L2 are the same, the second end 422b of the second non-conductive portion 422 and the first end 423a of the third non-conductive portion 423 may be disposed to overlap each other when viewed in the direction orthogonal to the rear side of the foldable housing 301. For example, even when the first length L1 and the second length L2 are the same, in the folded state of the foldable electronic device 300, the first end 422a of the second non-conductive portion 422 and the second end 423b of the third non-conductive portion 423 may be disposed so as not to overlap each other when viewed in the direction orthogonal to the rear side of the foldable housing 301.

The structure may be substantially equally applied to the fourth non-conductive portion 424, the fifth non-conductive portion 425, and the sixth non-conductive portion 426. According to an embodiment, even when the first length L1 and the second length L2 are substantially the same or similar, in the folded state of the foldable electronic device 300, a first end 424a of the fourth non-conductive portion 424 facing the second housing part 320 and a first end 425a of the fifth non-conductive portion 425 facing the first housing part 310 may be disposed to overlap each other when viewed in the direction (e.g., the +y direction) orthogonal to the rear side of the foldable housing 301. For example, even when the first length L1 and the second length L2 are the same, in the folded state of the foldable electronic device 300, a second end 424b of the fourth non-conductive portion 424 and a second end 425b of the fifth non-conductive portion 425 may be disposed so as not to overlap each other when viewed in the direction orthogonal to the rear side of the foldable housing 301. Even when the first length L1 and the second length L2 are the same, in the folded state of the foldable electronic device 300, a second end 425b of the fifth non-conductive portion 425 and a first end 426a of the sixth non-conductive portion 426 may be disposed to overlap each other when viewed in the direction orthogonal to the rear side of the foldable housing 301. For example, even when the first length L1 and the second length L2 are the same, in the folded state of the foldable electronic device 300, the first end 425a of the fifth non-conductive portion 425 and the second end 426b of the sixth non-conductive portion 426 may be disposed so as not to overlap each other when viewed in the direction orthogonal to the rear side of the foldable housing 301.

Referring to FIG. 11A, an extension direction of the first non-conductive portion 421 and an extension direction of the third non-conductive portion 423 may be substantially the same, and the second non-conductive portion 422 may be inclined with respect to the extension direction of the first non-conductive portion 421 and the extension direction of the third non-conductive portion 423. An extension direction of the fourth non-conductive portion 424 and an extension direction of the sixth non-conductive portion 426 may be substantially the same, and the fifth non-conductive portion 425 may be inclined with respect to the extension direction of the fourth non-conductive portion 424 and the extension direction of the sixth non-conductive portion 426.

According to an embodiment, even when the first length L1 and the second length L2 are substantially the same, when the first antenna and/or the second antenna operate, an electric field may be strongly formed in a region adjacent to a non-conductive portion. The efficiency of the first antenna and/or the efficiency of the second antenna may be improved by the second non-conductive portion 422 and the fifth non-conductive portion 425.

Referring to FIG. 11B, at least one second non-conductive portion 422 may include portions having different extension directions. The embodiment illustrated in FIG. 11B may be substantially the same as the embodiment illustrated in FIG. 7A, except for a structure that the first length L1 of the first conductive portion 411 and the second length L2 of the third conductive portion 413 are substantially the same. According to an embodiment, the efficiency of the first antenna and/or the efficiency of the second antenna may be improved by the second non-conductive portion 422 and the fifth non-conductive portion 425.

Referring to FIG. 11C, at least one second non-conductive portion 422 may include portions having different extension directions. The embodiment illustrated in FIG. 11B may be substantially the same as the embodiment illustrated in FIG. 8, except for a structure that the first length L1 of the first conductive portion 411 and the second length L2 of the third conductive portion 413 are substantially the same. According to an embodiment, the efficiency of the first antenna and/or the efficiency of the second antenna may be improved by the second non-conductive portion 422 and the fifth non-conductive portion 425.

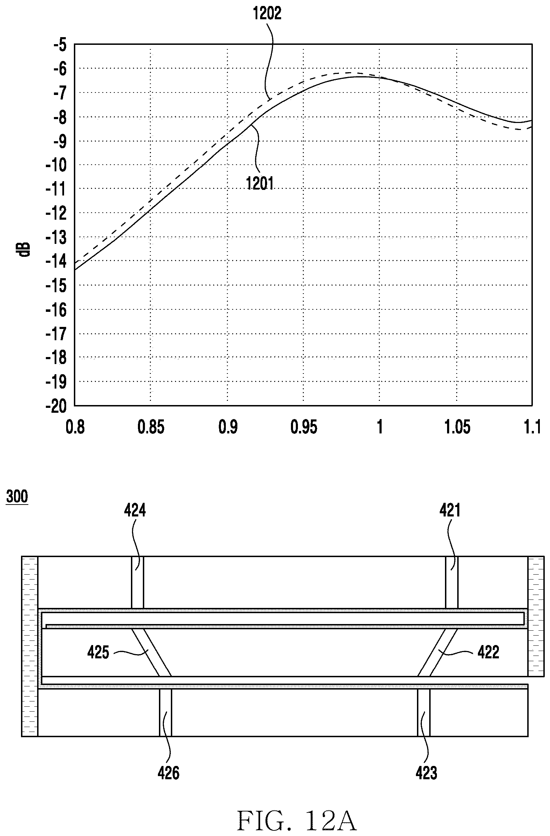

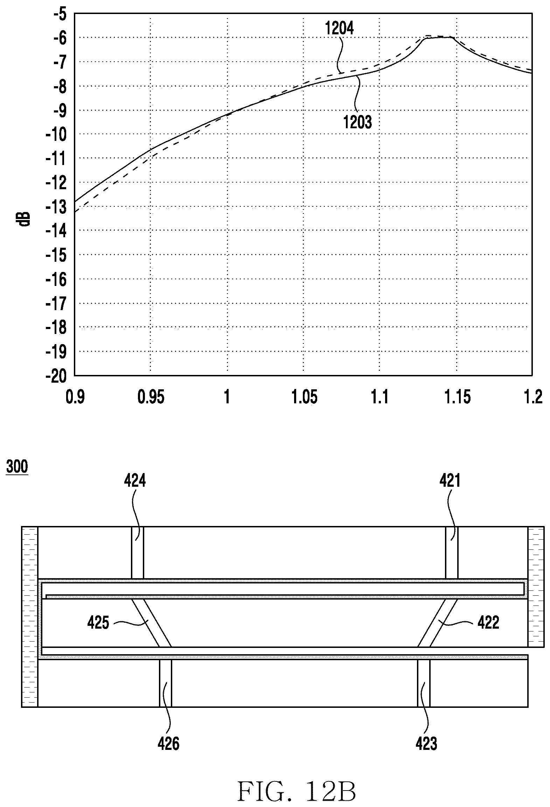

FIG. 12A is a graph indicating efficiency of a first antenna according to a dielectric constant of a second non-conductive portion. FIG. 12B is a graph indicating efficiency of a second antenna according to a dielectric constant of a third non-conductive portion.

According to an embodiment, a second dielectric constant of a second material forming a second non-conductive portion 422 may be higher than a first dielectric constant of a first material forming a first non-conductive portion 421. The second dielectric constant of the second material forming the second non-conductive portion 422 may be higher than a third dielectric constant of a third material forming a third non-conductive portion 423. When the second dielectric constant is higher than the first dielectric constant and the third dielectric constant, the efficiency of a first antenna and the efficiency of a second antenna may be improved.

According to an embodiment, a foldable electronic device 300 may further include a fourth non-conductive portion 424, a fifth non-conductive portion 425, and a sixth non-conductive portion 426. In this case, a fifth dielectric constant of a fifth material forming the fifth non-conductive portion 425 may be higher than a fourth dielectric constant of a fourth material forming the fourth non-conductive portion 424. The fifth dielectric constant of the fifth material forming the fifth non-conductive portion 425 may be higher than a sixth dielectric constant of a sixth material forming the sixth non-conductive portion 426. When the fifth dielectric constant is higher than the fourth dielectric constant and the sixth dielectric constant, the efficiency of the first antenna and the efficiency of the second antenna may be improved.

A first graph 1201 of FIG. 12A shows the efficiency of the first antenna when the second dielectric constant is about 2.7. A second graph 1202 of FIG. 12A shows the efficiency of the first antenna when the second dielectric constant is about 6.5. When comparing the first graph 1201 and the second graph 1202, the second graph 1202 may show higher efficiency than the first graph 1201 with respect to a signal in a first frequency band (e.g., about 1 GHz or less).

A third graph 1203 of FIG. 12B shows the efficiency of the second antenna when the second dielectric constant is about 2.7. A fourth graph 1204 of FIG. 12B shows the efficiency of the first antenna when the second dielectric constant is about 6.5. When comparing the third graph 1203 and the fourth graph 1204, the fourth graph 1204 may show higher efficiency than the third graph 1203 with respect to a signal in a second frequency band (e.g., about 1.1 GHz or higher).

According to an embodiment, when the dielectric constant of the second non-conductive portion 422 and/or the fifth non-conductive portion 425 is high, the intensity of the electric field may be strengthened when the first antenna and/or the second antenna operates. According to an embodiment, the foldable electronic device 300 may provide improved communication performance by including the second non-conductive portion 422 and/or the fifth non-conductive portion 425 formed of a material having a relatively high dielectric constant.

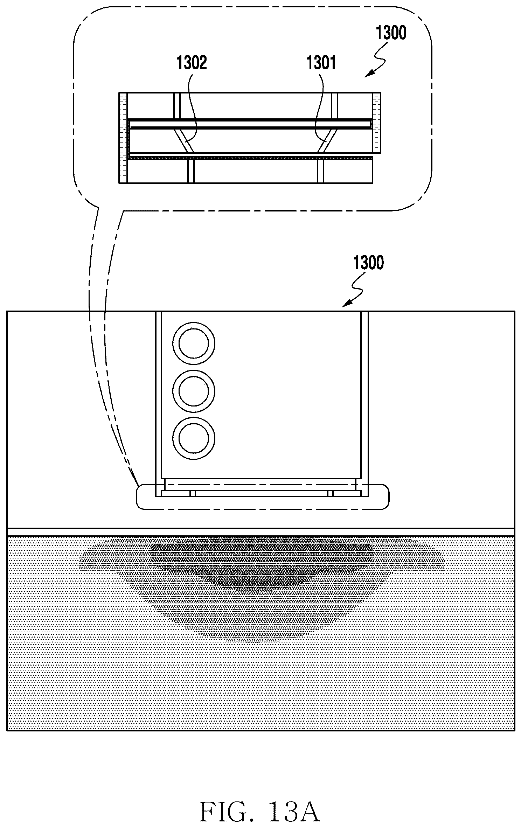

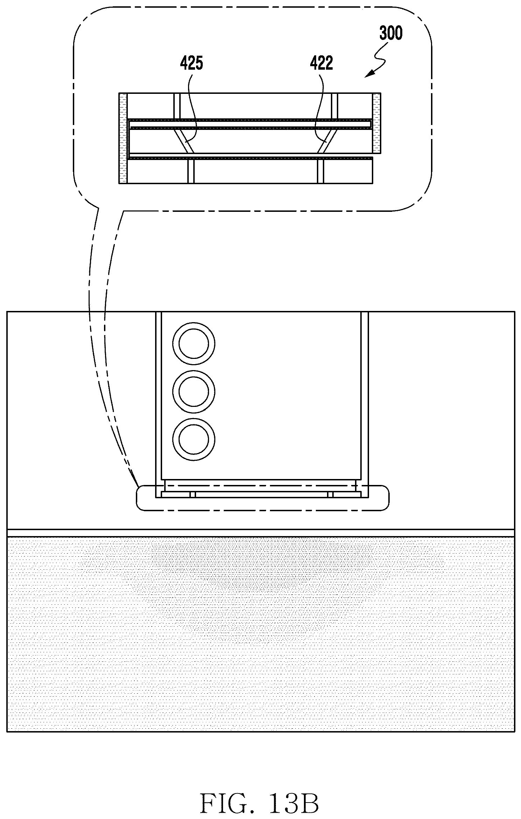

FIG. 13A is a diagram illustrating a specific absorption rate of an electronic device according to a comparative example. FIG. 13B is a diagram illustrating a specific absorption rate of an electronic device according to an embodiment.

Referring to FIG. 13A, an electronic device 1300 according to a comparative example may be referred to as a case where a dielectric constant of a material forming a second non-conductive portion 1301 and/or a fifth non-conductive portion 1302 is about 2.7. Referring to FIG. 13B, a foldable electronic device 300 according to an embodiment may be referred to as a case where a third dielectric constant of a second non-conductive portion 422 and/or a fifth non-conductive portion 425 is about 6.5. For example, when a first antenna operates, a specific absorption rate (SAR) of the foldable electronic device 300 according to an embodiment may be lower than a specific absorption rate of the electronic device 1300 according to a comparative example. For example, while the first antenna transmits and/or receives a signal on about 1 GHz frequency band, a 10g reference specific absorption rate may be about 4.09 W/kg for the foldable electronic device 300 according to an embodiment, and about 4.36 W/kg for the electronic device according to a comparative example. According to an embodiment, when the third dielectric constant increases from about 2.7 to about 6.5, the 10g reference specific absorption rate may be about 0.27 W/kg lower. The foldable electronic device 300 according to an embodiment may lower a specific absorption rate by including at least one third non-conductive portion 450 formed of a material having a relatively high dielectric constant.

Although the foldable electronic device described above (e.g., the foldable electronic device 300 of FIG. 3A) has been described as a device having a structure in which the second housing part 320 and the third housing part 330 are folded in different directions with respect to the first housing part 310, a structure of an electronic device 1401 is not limited thereto.

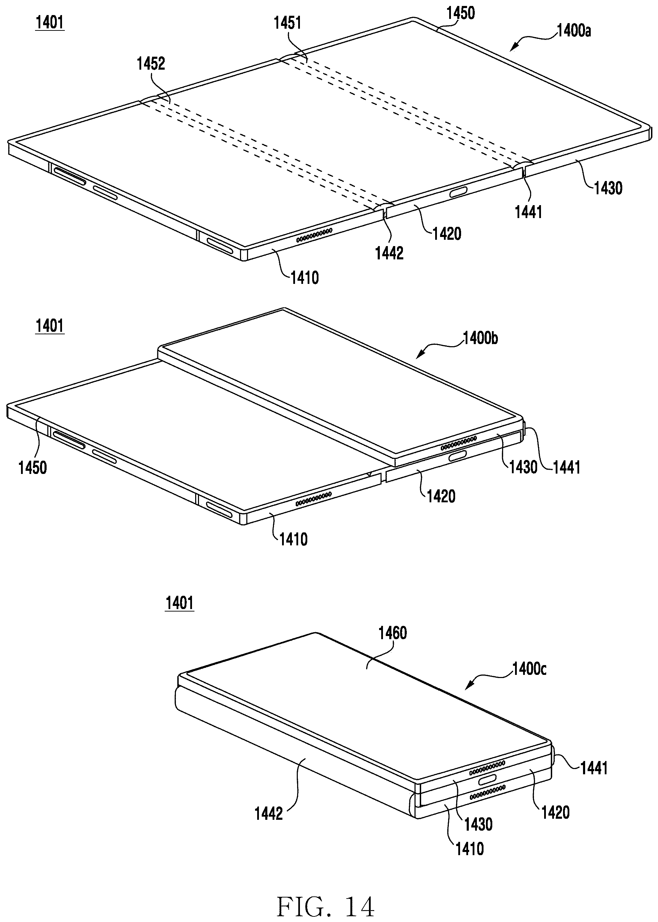

FIG. 14 illustrates a process in which an electronic device according to an embodiment is changed from an unfolded state to a folded state.

According to an embodiment, an electronic device 1401 may have a structure in which a first housing part 1410 and a second housing part 1420 are folded in the same direction with respect to a third housing part 1430. Except for a difference in a folding method, the electronic device 1401 described below may be substantially the same as the electronic device described above (e.g., the foldable electronic device 300 of FIG. 3A).

Referring to FIG. 14, the electronic device 1401 according to an embodiment may include a plurality of housing parts that are rotatably coupled. For example, the housing may include the first housing part 1410, the second housing part 1420, and the third housing part 1430 that are rotatably coupled to each other.

According to an embodiment, the first housing part 1410 may be rotatably coupled to a side of the second housing part 1420. The third housing part 1430 may be rotatably coupled to another side of the second housing part 1420. For example, hinge assemblies may include a first hinge assembly 1441 that rotatably couples the third housing part 1430 to the second housing part 1420 and a second hinge assembly 1442 that rotatably couples the first housing part 1410 to the second housing part 1420.

The electronic device 1401 according to an embodiment may include a flexible display 1450. The flexible display 1450 may include a first bendable portion 1451 capable of being folded by rotation of the second housing part 1420 and rotation of the third housing part 1430, and a second bendable portion 1452 capable of being folded by rotation of the first housing part 1410 and rotation of the third housing part 1430.

A first state 1400a of FIG. 14 may be referred to as an unfolded state of the electronic device 1401. The first state 1400a may indicate a fully unfolded state of the first housing part 1410, the second housing part 1420, and the third housing part 1430. In the unfolded state, the first housing part 1410, the second housing part 1420, and the third housing part 1430 may be disposed on substantially the same plane. In the first state 1400a, the first bendable portion 1451 and the second bendable portion 1452 may be substantially flat. In the first state 1400a, the third housing part 1430 may be positioned between the first housing part 1410 and the second housing part 1420.

A second state 1400b of FIG. 14 may indicate a state in which the third housing part 1430 is folded with respect to the third housing part 1420. In the first state 1400a, as the third housing part 1430 rotates with respect to the second housing part 1420, the electronic device 1401 may change from the first state 1400a to the second state 1400b. For example, the third housing part 1430 may rotates in a first direction (e.g., counterclockwise) with respect to the second housing part 1420 by the first hinge assembly 1441. When the third housing part 1430 rotates about 180 degrees, the second state 1400b in which the third housing part 1430 is disposed on the second housing part 1420 may be provided. In the second state 1400b, the first bendable portion 1451 may be bent.

A third state 1400c of FIG. 14 may be referred to as a folded state of the electronic device 1401. The third state 1400c may indicate a fully folded state of the first housing part 1410, the second housing part 1420, and the third housing part 1430. In the folded state, when the electronic device 1401 is viewed from above, the first housing part 1410, the second housing part 1420, and the third housing part 1430 may overlap each other. In the second state 1400b, as the first housing part 1410 rotates with respect to the second housing part 1420, the electronic device 1401 may change from the second state 1400b to the third state 1400c. For example, the first housing part 1410 may rotate in a first direction (e.g., counterclockwise) with respect to the second housing part 1420 by the second hinge assembly 1442. When the first housing part 1410 rotates about 180 degrees, the third state 1400c in which the first housing part 1410 is positioned below the second housing part 1420 may be provided. In the third state 1400c, the first bendable portion 1451 and the second bendable portion 1452 may be bent. A cover display 1460 may be disposed on the second housing part 1410. In the third state 1400c, the second housing part 1420 may be disposed between the first housing part 1410 and the third housing part 1430.

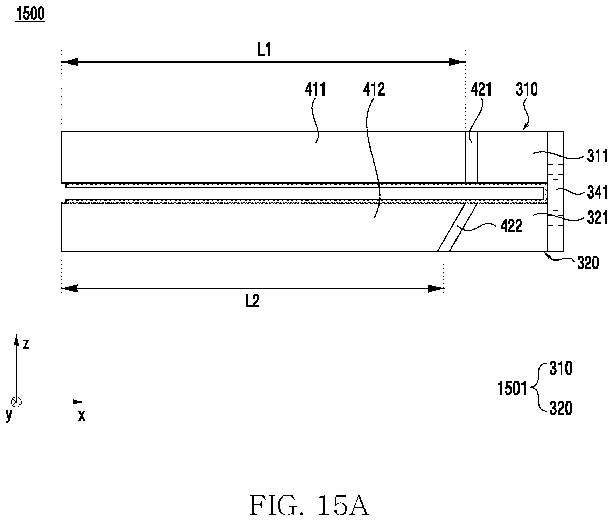

Although the above-described foldable electronic devices 300 and 1400 have been illustrated as including three housing parts, embodiments of the present disclosure are not limited thereto. As described below, the above-described structure may also be substantially identically or similarly applied to a foldable electronic device (e.g., a foldable electronic device 1500 of FIG. 15A) including two housing parts.

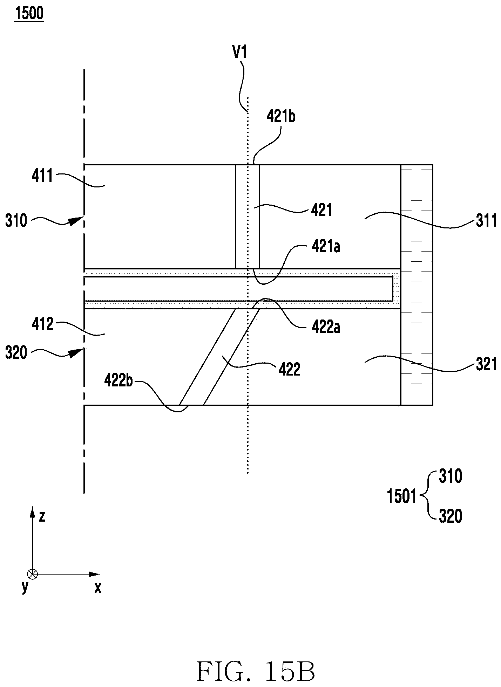

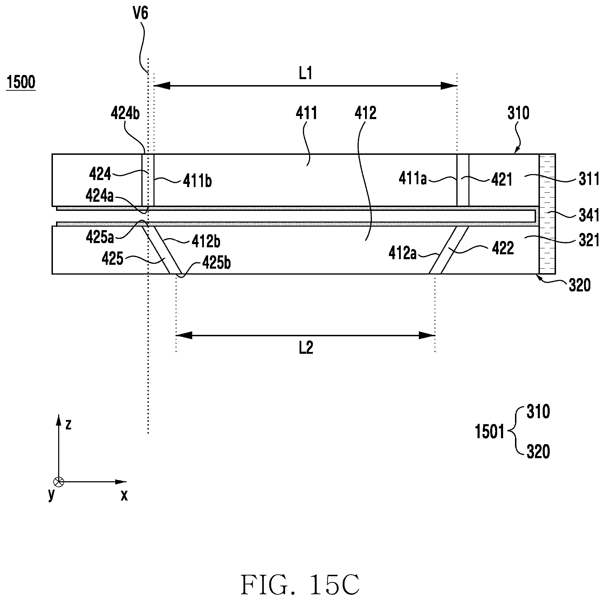

FIGS. 15A, 15B, and 15C illustrate a foldable electronic device according to various embodiments.

Referring to FIG. 15A, a foldable electronic device 1500 according to an embodiment may comprise a foldable housing 1501 including a first housing part 310 and a second housing part 320. The first housing part 310 and the second housing part 320 may be rotatably coupled to each other by a first hinge assembly 341. Except that a second hinge assembly (e.g., the second hinge assembly 342 of FIG. 3B) and a third housing part (e.g., the third housing part 330 of FIG. 3B) are omitted, the foldable electronic device 1500 according to an embodiment may be substantially the same as the above-described foldable electronic device (e.g., the foldable electronic device 300 of FIG. 3A, or the foldable electronic device 1400 of FIG. 14). Duplicate descriptions may be omitted or briefly described.

According to an embodiment, a first conductive portion 411 and a first non-conductive portion 421 may be included in a first lateral side 311 of the first housing part 310. A second conductive portion 412 and a second non-conductive portion 422 may be included in a second lateral side 321 of the second housing part 320. A first length L1 of the first conductive portion 411 may be different from a second length L2 of the second conductive portion 412. The first conductive portion 411 and the second conductive portion 412 may be adjacent to each other when the foldable housing 1501 is folded. When the first conductive portion 411 operates as an antenna radiator, the communication performance of the foldable electronic device 1500 may be deteriorated by the second conductive portion 412 adjacent to the first conductive portion 411.

Referring to FIG. 15B, in a folded state of the foldable electronic device 1500, a first end 421a of the first non-conductive portion 421 and a first end 422a of the second non-conductive portion 422 may be disposed adjacent to each other. In the folded state, a second end 421b of the first non-conductive portion 421 opposite the first end 421a of the first non-conductive portion 421 and a second end 422b of the second non-conductive portion 422 opposite the first end 422a of the second non-conductive portion 422 may be disposed distant to each other.

Referring to FIG. 15B, in the folded state of the foldable housing 1501, in order to reduce deterioration of the communication performance, when viewed in a direction (e.g., +z direction) orthogonal to a rear side of the foldable housing 1501, the first end 421a of the first non-conductive portion 421 facing the second housing part 320 and the first end 422a of the second non-conductive portion 422 facing the first housing part 310 may be disposed to overlap each other.

According to an embodiment, in the folded state of the foldable housing 1501, the first end 421a of the first non-conductive portion 421 may be disposed on a first virtual line V1 extending in a direction (e.g., the z-axis direction) orthogonal to the rear side of the first housing part 310. According to an embodiment, in the folded state of the foldable electronic device 300, at least a portion between the first end 421a of the first non-conductive portion 421 and the second end 421b of the first non-conductive portion 421 or at least a portion between the first end 422a of the second non-conductive portion 422 and the second end 422b of the second non-conductive portion 422 may not be disposed on the first virtual line V1.

Referring to FIG. 15C, the foldable electronic device 1500 according to an embodiment may further include a fourth non-conductive portion 424 and a fifth non-conductive portion 425.

According to an embodiment, the first lateral side 311 of the first housing part 310 may further include the fourth non-conductive portion 424. The first conductive portion 411 may be disposed between the first non-conductive portion 421 and the fourth non-conductive portion 424. The first non-conductive portion 421 may be contacted with an end 411a of the first conductive portion 411, and the fourth non-conductive portion 424 may be contacted with another end 411b of the first conductive portion 411. A first length L1 of the first conductive portion 411 may correspond to a distance between the first non-conductive portion 421 and the fourth non-conductive portion 424.

According to an embodiment, the second lateral side 321 of the second housing part 320 may further include a fifth non-conductive portion 425. The second conductive portion 412 may be disposed between the second non-conductive portion 422 and the fifth non-conductive portion 425. The second non-conductive portion 422 may be contacted with an end 412a of the second conductive portion 412, and the fifth non-conductive portion 425 may be contacted with another end 412b of the second conductive portion 412. A second length L2 of the second conductive portion 412 may correspond to a distance between the second non-conductive portion 422 and the fifth non-conductive portion 425.

An arrangement structure of the fourth non-conductive portion 424 and the fifth non-conductive portion 425 may correspond to an arrangement structure of the first non-conductive portion 421 and the second non-conductive portion 422.

According to an embodiment, in the folded state of the foldable housing 1501, a first end 424a of the fourth non-conductive portion 424 facing the second housing part 320 and a first end 425a of the fifth non-conductive portion 425 facing the first housing part 310 may be disposed to overlap each other when viewed in a direction (e.g., the +y direction) orthogonal to the rear side of the foldable housing 1501.

According to an embodiment, in the folded state of the foldable housing 1501, the first end 424a of the fourth non-conductive portion 424 may be disposed on a sixth virtual line V6 extending in a direction (e.g., the z-axis direction) orthogonal to the rear side of the first housing part 310. According to an embodiment, in the folded state of the foldable housing 1501, at least a portion between the first end 424a of the fourth non-conductive portion 424 and the second end 424b of the fourth non-conductive portion 424 or at least a portion between the first end 425a of the fifth non-conductive portion 425 and the second end 425b of the fifth non-conductive portion 425 may not be disposed on the sixth virtual line V6.

According to an embodiment, in case that the foldable electronic device 1500 satisfies the structure described with reference to FIG. 15B and/or FIG. 15C, when the first conductive portion 411 and/or the second conductive portion 412 radiates signals, the distribution of the electric field is strongly concentrated on a portion contacted with the non-conductive portions 421 and 423, thereby improving the efficiency of the first antenna and/or the efficiency of the second antenna.

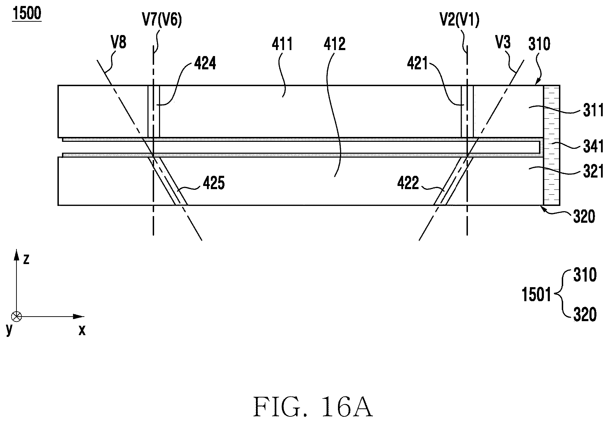

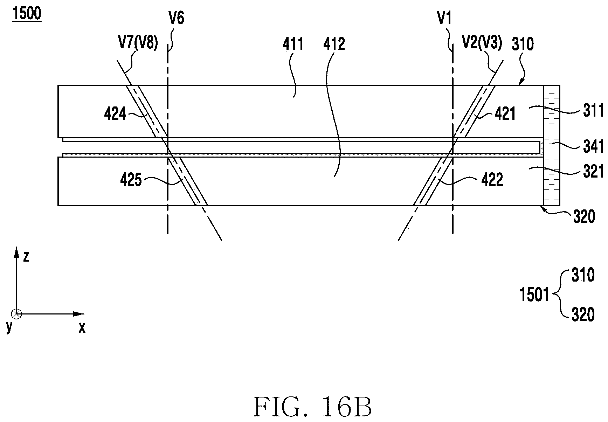

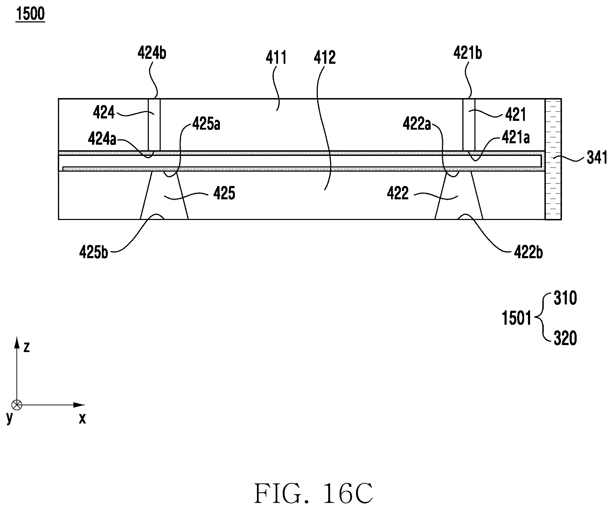

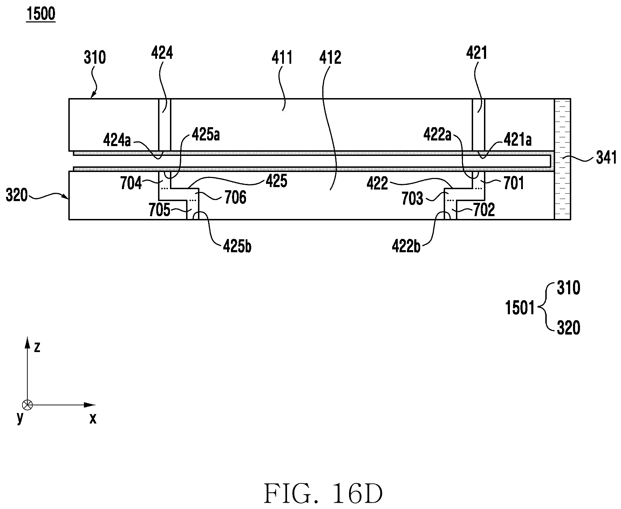

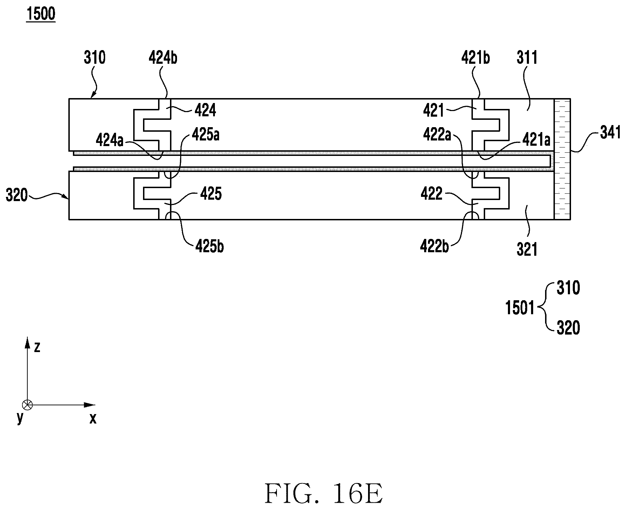

FIGS. 16A, 16B, 16C, 16D, and 16E illustrate a foldable electronic device according to various embodiments.

Referring to FIG. 16A, a first non-conductive portion 421 and a second non-conductive portion 422 may be disposed such that a second virtual line V2 extending from the first non-conductive portion 421 is different from a third virtual line V3 extending from the second non-conductive portion 422.

According to an embodiment, the first non-conductive portion 421 and the second non-conductive portion 422 may not extend in parallel. An incline may be formed between the first non-conductive portion 421 and the second non-conductive portion 422. According to an embodiment, when a foldable housing 1501 is folded, one of the first non-conductive portion 421 and the second non-conductive portion 422 may extend parallel to a first virtual line V1 extending in a direction (e.g., the z-axis direction) orthogonal to a rear side of the foldable housing 1501, and another may extend so as to be inclined to the first virtual line V1. In this case, the second virtual line V2 may correspond to the first virtual line V1.

Referring to FIG. 16A, the foldable electronic device 1500 may further include a fourth non-conductive portion 424 and a fifth non-conductive portion 425. In a folded state of the foldable housing 1501, the fourth non-conductive portion 424 and the fifth non-conductive portion 425 may be disposed such that a seventh virtual line V7 extending from the fourth non-conductive portion 424 is different from an eighth virtual line V8 extending from the fifth non-conductive portion 425.

According to an embodiment, the fourth non-conductive portion 424 and the fifth non-conductive portion 425 may not extend in parallel. An incline may be formed between the fourth non-conductive portion 424 and the fifth non-conductive portion 425. According to an embodiment, in the folded state of the foldable housing 1501, one of the fourth non-conductive portion 424 and the fifth non-conductive portion 425 may extend parallel to a sixth virtual line V6 extending in a direction (e.g., the z-axis direction) orthogonal to the rear side of the foldable housing 1501, and another may extend so as to be inclined to the sixth virtual line V6. For example, as in the embodiment illustrated in FIG. 16A, the fourth non-conductive portion 424 may extend parallel to the sixth virtual line V6, and the fifth non-conductive portion 425 may extend so as to be inclined to the sixth virtual line V6. In this case, the seventh virtual line V7 may correspond to the sixth virtual line V6.

Referring to FIG. 16B, the first non-conductive portion 421 and the second non-conductive portion 422 may be disposed such that the second virtual line V2 extending from the first non-conductive portion 421 is parallel to the third virtual line V3 extending from the second non-conductive portion 422. In this case, the first non-conductive portion 421 and the second non-conductive portion 422 may extend in the same direction.

According to an embodiment, in the folded state of the foldable housing 1501, the first non-conductive portion 421 and the second non-conductive portion 422 may be disposed such that the first virtual line V1 extending in a direction (e.g., the z-axis direction) orthogonal to the rear side of the foldable housing 1501does not match one of the second virtual line V2 and the third virtual line V3. For example, at least one of the first non-conductive portion 421 and the second non-conductive portion 422 may be disposed to have an incline with respect to the first virtual line V1.

According to an embodiment, the foldable electronic device 1500 may further include a fourth non-conductive portion 424 and a fifth non-conductive portion 425. According to an embodiment, the fourth non-conductive portion 424 and the fifth non-conductive portion 425 may be disposed such that a seventh virtual line V7 extending from the fourth non-conductive portion 424 is parallel to an eighth virtual line V8 extending from the fifth non-conductive portion 425. In this case, the fourth non-conductive portion 424 and the fifth non-conductive portion 425 may extend in the same direction.

According to an embodiment, in the folded state of the foldable housing 1501, the fourth non-conductive portion 424 and the fifth non-conductive portion 425 may be disposed such that a sixth virtual line V6 extending in a direction (e.g., the z-axis direction) orthogonal to the rear side of the foldable housing 1501does not match one of the seventh virtual line V7 and the eighth virtual line V8. For example, at least one of the fourth non-conductive portion 424 and the fifth non-conductive portion 425 may be disposed to have an incline with respect to the sixth virtual line V6.

Referring to FIG. 16C, a first width of the first non-conductive portion 421 may be narrower than a second width of the second non-conductive portion 422. According to an embodiment, in the folded state of the foldable housing 1501, the second non-conductive portion 422 may have a relatively wide width such that a first end 422a of the second non-conductive portion 422 may overlap a first end 421a of the first non-conductive portion 421.

According to an embodiment, the foldable electronic device 1500 may further include a fourth non-conductive portion 424 and a fifth non-conductive portion 425. A fourth width of the fourth non-conductive portion 424 may be narrower than a fifth width of the fifth non-conductive portion 425. According to an embodiment, in the folded state of the foldable housing 1501, the fifth non-conductive portion 425 may have a relatively wide width such that a first end 425a of the fifth non-conductive portion 425 overlaps a first end 424a of the fourth non-conductive portion 424.

Referring to FIG. 16D, the second non-conductive portion 422 may include portions having different extension directions. According to an embodiment, the second non-conductive portion 422 may include portions having different extension directions between the first end 421a of the first non-conductive portion 421 and the second end 422b of the second non-conductive portion 422.

According to an embodiment, the second non-conductive portion 422 may include a first portion 701, a second portion 702, and a third portion 703. The first portion 701 may be a portion extending in the -z direction from the first end 422a of the second non-conductive portion 422. The second portion 702 may be a portion extending in the +z direction from the second end 422b of the second non-conductive portion 422. The first portion 701 and the second portion 702 may not be on the same line and may be misaligned with each other. The third portion 703 may be a portion extending to connect an end of the first portion 701 and an end of the second portion 702. For example, an extension direction of the third portion 703 may be a direction (e.g., the x-axis direction) orthogonal to an extension direction of the first portion 701 and an extension direction of the second portion 702.

The foldable electronic device 1500 according to an embodiment may further include a fourth non-conductive portion 424 and a fifth non-conductive portion 425.

According to an embodiment, the fifth non-conductive portion 425 may include a fourth portion 704, a fifth portion 705, and a sixth portion 706. The fourth portion 704 may be a portion extending in the -z direction from a first end 425a of the fifth non-conductive portion 425. The fifth portion 705 may be a portion extending in the +z direction from a second end 425b of the fifth non-conductive portion 425. The fourth portion 704 and the fifth portion 705 may not be disposed on the same line and may be misaligned with each other. The sixth portion 706 may be a portion extending to connect an end of the fourth portion 704 and an end of the fifth portion 705. For example, an extension direction of the sixth portion 706 may be a direction (e.g., the x-axis direction) orthogonal to an extension direction of the fourth portion 704 and an extension direction of the fifth portion 705.

According to various embodiments, under a condition that the first end 421a of the first non-conductive portion 421 and the first end 422a of the second non-conductive portion 422 overlap each other, and the first end 424a of the fourth non-conductive portion 424 and the first end 425a of the fifth non-conductive portion 425 overlap each other, various embodiments of non-conductive portions 421, 422, 424, and 425 may be possible. Referring to FIG. 16E, each of the non-conductive portions 421, 422, 424, and 425 may have a form bent between both two ends. For example, the first non-conductive portion 421 may include one or more bent portions in which at least a portion between the first end 421a of the first non-conductive portion 421 and the second end 421b of the first non-conductive portion 421 are bent. For example, the second non-conductive portion 422 may include one or more bent portions in which at least a portion between the first end 422a of the second non-conductive portion 422 and the second end 422b of the second non-conductive portion 422 are bent. For example, the fifth non-conductive portion 425 may include one or more bent portions in which at least a portion between the first end 425a of the fifth non-conductive portion 425 and the second end 425b of the fifth non-conductive portion 425 are bent. In the embodiment illustrated in FIG. 16E, shapes of the non-conductive portions 421, 422, 424, and 425 are illustrated as being substantially identical or symmetrical, but are not limited thereto. For example, the bent portion of the first non-conductive portion 421 may face a hinge assembly 341, and the bent portion of the second non-conductive portion 422 may face the opposite of the hinge assembly 341. In addition, various embodiments may be possible.

A foldable electronic device 101, 300, and 1500 is provided. The foldable electronic device 101, 300, and 1500 may include wireless communication circuitry 192. The foldable electronic device 101, 300, and 1500 may include a foldable housing 301 accommodating the wireless communication circuitry 192 and including a first housing part 310 and a second housing part 320 that are rotatably coupled to each other. A first lateral side 311 of the first housing part 310 may include a first conductive portion 411 electrically connected to the wireless communication circuitry 192 and a first non-conductive portion 421 contacted with the first conductive portion 411. A second lateral side 321 of the second housing part 320 may include a second conductive portion 412 and a second non-conductive portion 421 contacted with the second conductive portion 412. In a folded state of the foldable housing 301, a first end 421a of the first non-conductive portion 421 and a first end 422a of the second non-conductive portion 422 may be disposed adjacent to each other, and a second end 421b of the first non-conductive portion 421 opposite the first end 421a of the first non-conductive portion 421 and a second end 422b of the second non-conductive portion 422 opposite the first end 422a of the second non-conductive portion 422 may be disposed distant to each other. In the folded state, the first end 421a of the first non-conductive portion 421 may be disposed on a first virtual line V1 extending in a direction substantially orthogonal to a front side or a rear side of the first housing part 310. At least a portion between the first end 421a of the first non-conductive portion 421 and the second end 421b of the first non-conductive portion 421 or at least a portion between the first end 422a of the second non-conductive portion 422 and the second end 422b of the second non-conductive portion 422 may not be disposed on the first virtual line V1.

According to an embodiment, in the folded state of the foldable electronic device 300, the first end 422a of the second non-conductive portion 422 may be disposed on the first virtual line V1.

According to an embodiment, in the folded state of the foldable electronic device 300, the first non-conductive portion 421 and the second non-conductive portion 422 may be disposed such that a second virtual line V2 extending from the first non-conductive portion 421 is different from a third virtual line V3 extending from the second non-conductive portion 422.

According to an embodiment, in the folded state of the foldable electronic device 300, the first non-conductive portion 421 and the second non-conductive portion 422 may be disposed such that the second virtual line V1 extending from the first non-conductive portion 421 is parallel to the third virtual line V2 extending from the second non-conductive portion 422.

According to an embodiment, in the folded state of the foldable electronic device 300, the first non-conductive portion 421 or the second non-conductive portion 422 may be disposed such that the first virtual line V1 does not match one of the second virtual line V2 and the third virtual line V3.

According to an embodiment, in the folded state of the foldable electronic device 300, one of the first non-conductive portion 421 and the second non-conductive portion 422 may extend parallel to the first virtual line V1, and another may extend so as to be inclined to the first virtual line V1.

According to an embodiment, the second conductive portion 412 may be electrically connected to the wireless communication circuitry 192. The wireless communication circuitry 192 may be configured to transmit or receive a first signal in a first frequency band through the first conductive portion 411, and transmit or receive a second signal in a second frequency band different from the first frequency band through the second conductive portion 412.

According to an embodiment, the first frequency band may be higher than the second frequency band.

According to an embodiment, a first length L1 of the first conductive portion 411 may be shorter than a second length L2 of the second conductive portion 412.

According to an embodiment, at least a portion of a first width of the first non-conductive portion 421 may be narrower than a second width of the second non-conductive portion 422.

According to an embodiment, a first dielectric constant of a first material forming the first non-conductive portion 421 may be different from a second dielectric constant of a second material forming the second non-conductive portion 422.

According to an embodiment, the foldable electronic device 101, 300, and 1500 may further include another hinge assembly 342. The foldable housing 301 may further include a third housing part 330 rotatably coupled with the first housing part 310 or the second housing part 320 through the other hinge structure 342. A third lateral side 331 of the third housing part 330 may include a third conductive portion 413 and a third non-conductive portion 423 contacted with the third conductive portion 413. In the folded state of the foldable electronic device 300, the second housing part 320 may be disposed between the first housing part 310 and the third housing part 320. In the folded state of the foldable electronic device 300, the second end 422b of the second non-conductive portion 422 and the first end 423a of the third non-conductive portion 423 may be disposed adjacent to each other. In the folded state of the foldable housing 310, the first end 422a of the second non-conductive portion 422 and the second end 423b of the third non-conductive portion 423 opposite the first end 423a of the third non-conductive portion 423 may be disposed distant to each other.

According to an embodiment, in the folded state of the foldable electronic device 300, the second end 422a of the second non-conductive portion 422 and the first end 423a of the third non-conductive portion 423 facing the second housing part 320 may be disposed to overlap each other when viewed in the direction orthogonal to the rear side of the foldable housing 301. In the folded state of the foldable electronic device 300, the first end 422a of the second non-conductive portion 422 and the second end 423b of the third non-conductive portion 423 opposite to the first end 423a of the third non-conductive portion 423 may be disposed so as not to overlap each other when viewed in the direction orthogonal to the rear side of the foldable housing 301.

According to an embodiment, in the folded state of the foldable electronic device 300, the second end 422b of the second non-conductive portion 422 may be disposed on a fourth virtual line V4 extending in a direction orthogonal to the rear side of the second housing part 320. In the folded state of the foldable electronic device 300, the at least a portion between the first end 422a of the second non-conductive portion 422 and the second end 422b of the second non-conductive portion 422 or at least a portion between the first end 423a of the third non-conductive portion 423 and the second end 423b of the third non-conductive portion 423 may not be disposed on the fourth virtual line V4.

According to an embodiment, in the folded state of the foldable electronic device 300, the first end 423a of the third non-conductive portion 423 may be disposed on the fourth virtual line V4.

According to an embodiment, in the folded state of the foldable electronic device 300, the second non-conductive portion 422 and the third non-conductive portion 423 may be disposed such that the third virtual line V3 extending from the second non-conductive portion 422 is different from a fifth virtual line V5 extending from the third non-conductive portion 423.

According to an embodiment, in the folded state of the foldable electronic device 300, the second non-conductive portion 422 and the third non-conductive portion 423 may be disposed such that the third virtual line V3 extending from the second non-conductive portion 422 is parallel to the fifth virtual line V5 extending from the third non-conductive portion 423.

According to an embodiment, in the folded state of the foldable electronic device 300, the second non-conductive portion 422 and the third non-conductive portion 423 may be disposed such that the fourth virtual line V4 does not match one of the third virtual line V3 or the fifth virtual line V5.

According to an embodiment, the first non-conductive portion 421 may be contacted with an end 411a of the first conductive portion 411, and the second non-conductive portion 422 may be contacted with an end 412a of the second conductive portion 412. The first lateral side 311 of the first housing part 310 may further include a fourth non-conductive portion 424 contacted with another end 411a of the first conductive portion 411. The second lateral side 321 of the second housing part 320 may further include a fifth non-conductive portion 425 contacted with another end 420b of the second conductive portion 420. In the folded state of the foldable electronic device 300, the first end 424a of the fourth non-conductive portion 424 may be disposed on a sixth virtual line V6 extending in a direction substantially orthogonal to the rear side of the first housing part 310. In the folded state of the foldable electronic device 300, at least a portion between the first end 424a of the fourth non-conductive portion 424 and the second end 424b of the fourth non-conductive portion 424 and at least a portion between the first end 425a of the fifth non-conductive portion 425 and the second end 425b of the fifth non-conductive portion 425 may not be disposed on the sixth virtual line V6. In the folded state of the foldable electronic device 300, the first end 424a of the fourth non-conductive portion 424 and the first end 425a of the fifth non-conductive portion 425 may be disposed adjacent to each other, and the second end 424b of the fourth non-conductive portion 424 opposite the first end 424a of the fourth non-conductive portion 424 and the second end 425b of the fifth non-conductive portion 425 opposite the first end 425a of the fifth non-conductive portion 425 may be disposed distant to each other.

According to an embodiment, in the folded state of the foldable electronic device 300, the first end 425a of the fifth non-conductive portion 425 may be disposed on the sixth virtual line V6.

According to an embodiment, in the folded state of the foldable electronic device 300, the fourth non-conductive portion 424 and the fifth non-conductive portion 425 may be disposed such that a seventh virtual line V7 extending from the fourth non-conductive portion 424 is different from an eighth virtual line V8 extending from the fifth non-conductive portion 425.

According to an embodiment, in the folded state of the foldable electronic device 300, the fourth non-conductive portion 424 and the fifth non-conductive portion 425 may be disposed such that the seventh virtual line V7 extending from the fourth non-conductive portion 424 is parallel to the eighth virtual line V8 extending from the fifth non-conductive portion 425.

According to an embodiment, in the folded state of the foldable electronic device 300, the fourth non-conductive portion 424 and the fifth non-conductive portion 425 may be disposed such that the sixth virtual line V6 does not match one of the seventh virtual line V7 and the eighth virtual line V8.

According to an embodiment, in the folded state of the foldable electronic device 300, one of the fourth non-conductive portion 424 and the fifth non-conductive portion 425 may extend parallel to the sixth virtual line V6, and another may extend so as to be inclined to the sixth virtual line V6.

According to an embodiment, the first non-conductive portion 421 may be symmetrical with the fourth non-conductive portion 424 with respect to a central portion of the first housing part 310. The second non-conductive portion 422 may be symmetrical with the fifth non-conductive portion 425 with respect to a central portion of the second housing part 320.

According to an embodiment, in the folded state of the foldable electronic device 300, when viewed in a direction orthogonal to the rear side of the foldable housing 301, the first end 422a of the second non-conductive portion 422 may overlap the first end 421a of the first non-conductive portion 421 to reduce the influence of the second conductive portion 422 adjacent to the first conductive portion 421 on signals radiated through the first conductive portion 421.

A foldable electronic device 101, 300, and 1500 is provided. The foldable electronic device 101 and 300 may include wireless communication circuitry 192. The foldable electronic device 101 and 300 may include a hinge assembly 341. The foldable electronic device 101 and 300 may include a foldable housing 301 accommodating the wireless communication circuitry 192 and including a first housing part 310 and a second housing part 320 that are rotatably coupled to the hinge assembly 341. A first lateral side 311 of the first housing part 310 may include a first conductive portion 411 electrically connected to the wireless communication circuitry 192 and a first non-conductive portion 421 contacted with the first conductive portion 411. A second lateral side 321 of the second housing part 320 may include a second conductive portion 411 and a second non-conductive portion 421 contacted with the second conductive portion 411. In the folded state of the foldable electronic device 300, when viewed in a direction orthogonal to a rear side of the foldable housing 301, a first end 421a of the first non-conductive portion 421 facing the second housing part 320 and a first end 422a of the second non-conductive portion 422 facing the first housing part 310 may be disposed to overlap each other. In the folded state of the foldable electronic device 300, when viewed in the direction orthogonal to the rear side of the foldable housing 301, a second end 421b of the first non-conductive portion 421 opposite the first end 421a of the first non-conductive portion 421 and a second end 422b of the second non-conductive portion 422 opposite the first end 422a of the second non-conductive portion 422 may be disposed so as not to overlap each other.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. A foldable electronic device comprising:
wireless communication circuitry; and
a foldable housing including a first housing part and a second housing part rotatably coupled to the first housing part,
wherein a first lateral side of the first housing part includes:
a first conductive portion electrically connected to the wireless communication circuitry, and
a first non-conductive portion contacted with the first conductive portion,
wherein a second lateral side of the second housing part includes:
a second conductive portion, and
a second non-conductive portion contacted with the second conductive portion,
wherein, in a folded state of the foldable electronic device, a first end of the first non-conductive portion and a first end of the second non-conductive portion are disposed adjacent to each other, and a second end of the first non-conductive portion opposite to the first end of the first non-conductive portion and a second end of the second non-conductive portion opposite to the first end of the second non-conductive portion are disposed distant to each other,
wherein, in the folded state of the foldable electronic device, the first end of the first non-conductive portion is disposed on a first virtual line extending in a direction substantially orthogonal to a rear side of the first housing part, and
wherein, in the folded state of the foldable electronic device, at least a portion of the first non-conductive portion between the first end of the first non-conductive portion and the second end of the first non-conductive portion or at least a portion of the second non-conductive portion between the first end of the second non-conductive portion and the second end of the second non-conductive portion is not disposed on the first virtual line.

2. The foldable electronic device of claim 1,
wherein, in the folded state of the foldable electronic device, the first end of the second non-conductive portion is disposed on the first virtual line.

3. The foldable electronic device of claim 1 or 2,
wherein, in the folded state of the foldable electronic device, the first non-conductive portion and the second non-conductive portion are disposed such that a second virtual line extending from the first non-conductive portion is different from a third virtual line extending from the second non-conductive portion,
wherein the second virtual line is a virtual line passing through the first end and the second end of the first non-conductive portion and the third virtual line is a virtual line passing through the first end and the second end of the second non-conductive portion.

4. The foldable electronic device of any one of claim 1 to 3,
wherein, in the folded state of the foldable electronic device, the first non-conductive portion and the second non-conductive portion are disposed such that a second virtual line extending from the first non-conductive portion is parallel to a third virtual line extending from the second non-conductive portion,
wherein the second virtual line is a virtual line passing through the first end and the second end of the first non-conductive portion and the third virtual line is a virtual line passing through the first end and the second end of the second non-conductive portion.

5. The foldable electronic device of claim 3 or 4,
wherein, in the folded state of the foldable electronic device, the first non-conductive portion and the second non-conductive portion are disposed such that the first virtual line is different from one of the second virtual line and the third virtual line.

6. The foldable electronic device of any one of claims 1 to 5,
wherein, in the folded state of the foldable electronic device, one of the first non-conductive portion and the second non-conductive portion is parallel to the first virtual line and another of the first non-conductive portion and the second non-conductive portion is inclined with respect to the first virtual line.

7. The foldable electronic device of any one of claims 1 to 6,
wherein the second conductive portion is electrically connected to the wireless communication circuitry,
wherein the wireless communication circuitry is configured to:
transmit or receive a first signal on a first frequency band, through the first conductive portion, and
transmit or receive a second signal on a second frequency band different from the first frequency band, through the second conductive portion.

8. The foldable electronic device of any one of claims 1 to 7,
wherein a first width of the first non-conductive portion is at least partially narrower than a second width of the second non-conductive portion.

9. The foldable electronic device of any one of claims 1 to 8,
wherein a dielectric constant of a first material forming the first non-conductive portion is different from a dielectric constant of a second material forming the second non-conductive portion.

10. The foldable electronic device of any one of claims 1 to 9,
wherein the foldable housing further includes a third housing part rotatably coupled to the first housing part or the second housing part, such that the second housing part is positioned between the first housing part and the third housing part in the folded state of the foldable electronic device,
wherein a third lateral side of the third housing part includes:
a third conductive portion, and
a third non-conductive portion contacted with the third conductive portion, and
wherein, in the folded state of the foldable electronic device, the second end of the second non-conductive portion and a first end of the third non-conductive portion are disposed adjacent to each other, and the first end of the second non-conductive portion and a second end of the third non-conductive portion opposite to the first end of the third non-conductive portion are disposed distant to each other.

11. The foldable electronic device of claim 10,
wherein, in the folded state of the foldable electronic device, the second end of the second non-conductive portion is disposed on a fourth virtual line extending in a direction substantially orthogonal to a rear side of the second housing part, and
wherein, in the folded state of the foldable electronic device, at least a portion of the second non-conductive portion between the first end of the second non-conductive portion and second end of the second non-conductive portion or at least a portion of the third non-conductive portion between the first end of the third non-conductive portion and the second end of the third non-conductive portion is not disposed on the fourth virtual line.

12. The foldable electronic device of claim 11,
wherein, in the folded state of the foldable electronic device, the first end of the third non-conductive portion is disposed on the fourth virtual line.

13. The foldable electronic device of claim 11 or 12,
wherein, in the folded state of the foldable electronic device, the second non-conductive portion and the third non-conductive portion are disposed such that a third virtual line extending from the second non-conductive portion is different from a fifth virtual line extending from the third non-conductive portion,
wherein the third virtual line is a virtual line passing through the first end and the second end of the second non-conductive portion and the fifth virtual line is a virtual line passing through the first end and the second end of the third non-conductive portion.

14. The foldable electronic device of any one of claims 11 to 13,
wherein, in the folded state of the foldable electronic device, the second non-conductive portion and the third non-conductive portion are disposed such that a third virtual line extending from the second non-conductive portion is parallel to a fifth virtual line extending from the third non-conductive portion,
wherein the third virtual line is a virtual line passing through the first end and the second end of the second non-conductive portion and the fifth virtual line is a virtual line passing through the first end and the second end of the third non-conductive portion.

15. The foldable electronic device of claim 13 or 14,
wherein, in the folded state of the foldable electronic device, the second non-conductive portion and the third non-conductive portion are disposed such that the fourth virtual line is different from one of the third virtual line or the fifth virtual line.
